(19) Europäisches Patentamt

European Patent Office

Office européen des brevets

(11) **EP 1 099 930 B1**

(12) **EUROPEAN PATENT SPECIFICATION**

(45) Date of publication and mention
of the grant of the patent:
**14.06.2006 Bulletin 2006/24**

(51) Int Cl.:
***G01C 19/56*** (2006.01)     ***G01P 9/04*** (2006.01)

(21) Application number: **00309009.9**

(22) Date of filing: **13.10.2000**

(54) **Gyroscope and input device**

Kreisel und Eingabevorrichtung

Gyroscope et dispositif d'entrée

(84) Designated Contracting States:
**DE FR GB SE**

(30) Priority: **09.11.1999 JP 31887399**
       **10.11.1999 JP 32032399**
       **24.01.2000 JP 2000015052**

(43) Date of publication of application:
**16.05.2001 Bulletin 2001/20**

(73) Proprietors:
  • **ALPS ELECTRIC CO., LTD.**
    **Ota-ku**
    **Tokyo 145 (JP)**
  • **ESASHI, Masayoshi**
    **Sendai-shi,**
    **Miyagi-ken 982 (JP)**

(72) Inventors:
  • **Abe, Munemitsu,**
    **c/o Alps Electric Co., Ltd.**
    **Tokyo 145 (JP)**
  • **Shinohara, Eiji,**
    **c/o Alps Electric Co., Ltd.**
    **Tokyo 145 (JP)**
  • **Esashi, Masayoshi**
    **Sendai-shi,**
    **Miyagi-ken (JP)**

(74) Representative: **Kensett, John Hinton**
    **Saunders & Dolleymore,**
    **9 Rickmansworth Road**
    **Watford,**
    **Hertfordshire WD18 0JU (GB)**

(56) References cited:
    **US-A- 4 750 364**         **US-A- 5 821 420**

## Description

BACKGROUND OF THE INVENTION

1. Field of the Invention

The present invention relates to a gyroscope and an input device incorporating the gyroscope, and, more particularly, to a gyroscope of the type which detects the displacement of a leg of a tuning fork by referring to a change in capacitance in response to an angular velocity input and to an input device incorporating the gyroscope.

2. Description of the Related Art

There are known gyroscopes which employ a tuning fork fabricated of a material such as silicon having electrical conductivity. The gyroscope of this type allows one leg to vibrate in one direction, and detects a vibration in a direction, perpendicular to the one direction of the vibration, caused by the Coriolis force that is generated when an angular velocity is applied about the longitudinal axis of the leg during vibration. Since the magnitude of the vibration caused by the Coriolis force is representative of the magnitude of the angular velocity, the gyroscope can be used as an angular velocity sensor. For instance, the gyroscope may be implemented as a coordinates input device for personal computers.

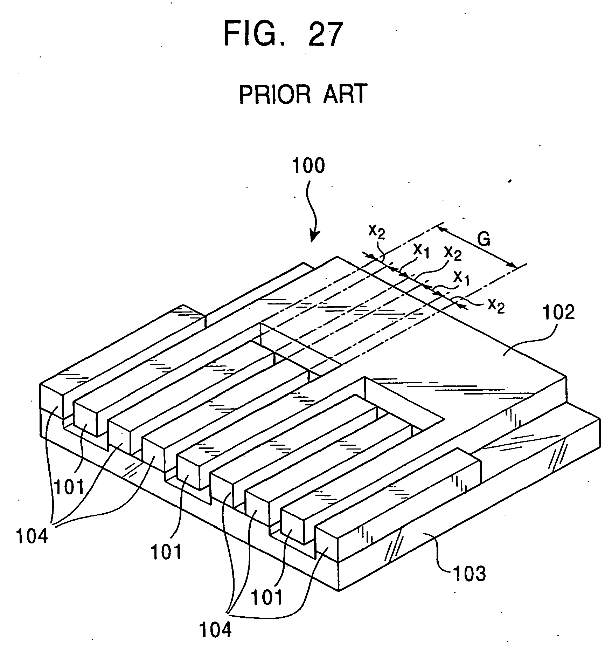

FIG. 27 shows the construction of a turning fork, which is a major component of a conventional gyroscope. As shown, a tuning fork 100 includes three legs 101 and a support portion 102 which connects the base portions of the legs 101, and is fabricated of silicon to which electrical conductivity is imparted. The tuning fork 100 is secured at the support portion 102 thereof. Driving electrodes (not shown) are respectively arranged beneath the legs 101. The legs 101 are vibrated in a vertical direction under electrostatic attractive forces that take place when a voltage is applied to the driving electrodes.

When an angular velocity acting about the axis of rotation aligned in a longitudinal direction of the leg 101 is applied during the vertical vibration of the legs 101, a horizontal vibration takes place. The horizontal vibration is detected by a pair of detection electrodes 104 arranged on both sides of each of the legs 101. Specifically, when the gap between one detection electrode 104 on one side of the leg 101 and the leg 101 is narrowed in response to a horizontal displacement of the leg 101, the gap between another detection electrode 104 arranged on the other side of the leg 101 and the leg 101 is widened. The capacitance of the two capacitors, formed of the detection electrodes 104 and the leg 101, is thus varied. The magnitude of an input angular velocity is thus derived from the change in the capacitance.

Since the gyroscope thus constructed has the detection electrodes 104 on both sides of each leg 101, the gap between one leg 101 and another leg 101 (hereinafter referred to a leg gap) cannot be set to be too narrow. Now, let $x_1$ represent the width of the detection electrode 104, and $x_2$ represent the gap between the detection electrode 104 and the leg 101 and the gap between the adjacent detection electrodes 104, and the leg gap G is $G=2x_1+3x_2$. The limitation of $x_1$ and $x_2$ in manufacturing process, attributed to the limitation of the silicon process technology for semiconductor device manufacturing, sets a limit on the effort of narrowing the gap G.

It is known that a narrow leg gap G in a trident, three-legged fork, increases the Q factor, i.e., a measure of performance indicating the magnitude of resonance in a device. A larger Q factor increases not only the sensitivity of detecting the angular velocity, but also the conversion efficiency from electrical energy input to a device to vibration energy. The driving voltage required is thus lowered.

Since the conventional gyroscope is subject to the limitation in the miniaturization of the leg gap, attempts for various design and performance improvements such as a compact design of the device, an increase in the detection sensitivity, a reduction in driving voltage, have not borne fruit.

SUMMARY OF THE INVENTION

It is an object of the present invention to provide a high-performance, low-cost gyroscope having various advantages and an input device incorporating the gyroscope.

In a first aspect of the present invention, a gyroscope includes a vibrator, fabricated of an electrically conductive material with the base end thereof serving as a support portion, a base member for supporting the support portion of the vibrator, a driver for driving the vibrator, a plurality of movable detection electrodes connected in parallel, each movable detection electrode formed of one of a plurality of protrusions of the vibrator, the plurality of the protrusions being formed by processing at least part of the surface of the end portion of the vibrator, perpendicular to the driving direction of the vibrator and parallel to the direction of displacement detection of the vibrator, each protrusion having a width not shorter than the amplitude of the vibration of the vibrator in the direction of the displacement detection, and a plurality of stationary detection electrodes connected in parallel for detecting the displacement of the vibrator, wherein the stationary detection electrodes are arranged on the base member to be opposed to the plurality of the movable detection electrodes so that a capacitance develops with the plurality of the movable detection electrodes opposed thereto, and each of the stationary detection electrodes has a width not shorter than the amplitude of the vibration of the vibrator in the direction of the displacement detection.

In accordance with the first aspect of the present invention, the gyroscope works on the same principle as that for the conventional gyroscope, in which the vibration of the vibrator of a fork (corresponding to the above-referenced leg) is detected by a change in capacitance. Capacitance C is determined by the following equation (1).

$$C = \varepsilon S/d \qquad \ldots \quad (1)$$

where $\varepsilon$ is a dielectric constant of a dielectric material, S is the area of electrodes, and d is the gap between the electrodes.

The conventional gyroscope detects a change in the gap between the leg and the detection electrode during vibration, i.e., a change in capacitance resulting from a change in the gap d in equation (1). The difference between the gyroscope of the present invention and the convention gyroscope lies in that the gyroscope of the present invention detects a change in the areas of the opposed detection electrodes, i.e., a change in capacitance resulting from a change in the electrode area S in equation (1) during vibration.

The detection electrode of the gyroscope of this invention in the first aspect includes the plurality of the movable detection electrodes arranged on the vibrator and the plurality of the stationary detection electrodes arranged on the base member, and respectively opposed to the movable detection electrodes. The plurality of the movable detection electrodes are respectively formed of the plurality of the protrusions which are produced by processing at least part of the surface of the end portion of the vibrator, perpendicular to the driving direction of the vibrator and parallel to the direction of displacement detection of the vibrator. Each of the protrusions, connected in parallel, has a width not shorter than the amplitude of the vibration of the vibrator in the displacement direction. Each of the plurality of stationary detection electrodes, connected in parallel, has a width not shorter than the amplitude of the vibration of the vibrator in the displacement direction. Rather than using a movable detection electrode formed of a metal film on the surface of a vibrator, the present invention employs, as the movable detection electrode, the protrusion which is formed by processing the end portion of the vibrator of the electrically conductive material such as silicon in a protrusion and groove configuration. The protrusion, which is closer to the stationary detection electrode than the groove, functions as an electrode.

With this arrangement, an angular velocity is applied about the axis of rotation aligned in the longitudinal direction of the vibrator with the vibrator of the tuning fork vibrated by the driver, and the Coriolis force causes a vibration in a direction perpendicular to the direction of the vibration caused by the driver. Since the movable detection electrodes on the vibrator are opposed to the stationary detection electrodes on the base member, a change in capacitance occurs when facing areas between the movable detection electrode and the stationary detection electrode vary in response to the vibration of the vibrator. The width of each detection electrode is set to be not shorter than the amplitude of the vibration of the vibrator in the displacement detection. If the width of each detection electrode is narrower than the maximum amplitude of the vibration of the vibrator, capacitance detection can fail. This is because the movable detection electrode on the vibrator can fail to face the stationary detection electrode on the base member when the vibrator vibrates to a maximum in response to a large angular velocity input. The "amplitude" refers to the amplitude of the vibration caused by the Coriolis force when an angular velocity is applied, and does not refer to the amplitude of the vibration caused by the driver.

In accordance with the first aspect of the present invention, when the base portion of the vibrator is secured to the base member, it suffices to arrange the stationary detection electrode on the base member to face the movable detection electrode on the vibrator. This arrangement eliminates the need for the arrangement of a detection electrode between legs, which would be required in the conventional art. The leg gap is thus minimized to a limit as small as the processing limit available in silicon processing. The Q factor is thus increased, the detection sensitivity is heightened, and the required driving voltage is reduced. The device itself is miniaturized.

In a second aspect of the present invention, a gyroscope includes a vibrator, fabricated of an electrically conductive material with the base end thereof serving as a support portion, a base member for supporting the support portion of the vibrator, a driver for driving the vibrator, a plurality of movable detection electrodes connected in parallel, each movable detection electrode formed of one of a plurality of protrusions of the vibrator, the plurality of the protrusions being formed by processing at least part of the surface of the end portion of the vibrator, perpendicular to the driving direction of the vibrator and parallel to the direction of displacement detection of the vibrator, each protrusion having a width not shorter than the amplitude of the vibration of the vibrator in the direction of the displacement detection, and two groups of stationary detection electrodes, each group including a plurality of stationary detection electrodes, wherein the plurality of the stationary detection electrodes of the two groups are arranged on the base member to be opposed to the plurality of the movable detection electrodes so that a capacitance develops with the plurality of the movable detection electrodes opposed thereto, the outer edge of each of the plurality of the stationary detection electrodes in the one group outwardly overextends by at least a width equal to the maximum amplitude of the vibration of the vibrator in the direction of the displacement detection beyond the outer edge of each of the plurality of the movable detection electrodes opposed thereto, the outer edge of each of the plurality of the stationary detection electrodes in the other group outwardly overextends by at least a width equal to the maximum amplitude of the vibration of the vibrator in the direction of the displacement detection beyond the outer edge of each of the plurality of the movable detection electrodes opposed thereto, and each of the stationary detection electrodes has a width not shorter than the amplitude of the vibration of the vibrator in the direction of the displacement detection, and wherein a determination is made of a difference between the sum of capacitance developed between the plurality of the stationary detection electrodes in the one group and the plurality of the movable detection electrodes respectively opposed thereto and the sum of capacitance developed between the plurality of the stationary detection electrodes in the other group and the plurality of the movable detection electrodes respectively opposed thereto.

In accordance with the second aspect of the present invention, in a detection method of a change in capacitance, the gyroscope detects a difference between the sum of capacitance developed between the plurality of the stationary detection electrodes in the one group and the plurality of the movable detection electrodes respectively opposed thereto and the sum of capacitance developed between the plurality of the stationary detection electrodes in the other group and the plurality of the movable detection electrodes respectively opposed thereto. In other words, the gyroscope of the present invention uses a differential detection method for detecting a change in capacitance.

If the facing areas between the stationary detection electrodes in the one group and the movable detection electrodes respectively opposed thereto increase in response to the displacement of the vibrator in one direction, for instance, thereby increasing capacitance therebetween, the facing areas between the stationary detection electrodes in the other group and the movable detection electrodes respectively opposed thereto will decrease, thereby decreasing capacitance therebetween. When a difference is determined between the sum of capacitance developed between the plurality of the stationary detection electrodes in the one of the two groups and the plurality of the movable detection electrodes respectively opposed thereto and the sum of capacitance developed between the plurality of the stationary detection electrodes in the other group and the plurality of the movable detection electrodes respectively opposed thereto, initial values with no displacement taking place cancel each other because of their equal values. A change in capacitance on the one group is positive while a change in capacitance on the other group is negative, and the change only remains. This arrangement allows noise components contained in the initial capacitance values to cancel each other, thereby improving detection accuracy.

The driver may be a driving electrode on the base member facing the vibrator. The driving electrode extends in the longitudinal direction of the vibrator, and is preferably arranged to be apart from the detection electrode to prevent stray capacitance from being created therebetween. If stray capacitance is created therebetween, the stray capacitance is detected together with a change in capacitance with the detection electrode when the angular velocity is detected. The stray capacitance becomes a noise component, thereby dropping S/N ratio. With the driving electrode spaced apart from the detection electrode, no such problem is presented.

The detection electrodes may be arranged on the top of or the underside of the vibrator to increase the capacitance to be detected and to assure the ease of the electrode formation.

The following three surface configurations of the vibrator having the movable detection electrodes produced as the protrusions are contemplated.

(1) While the top surface of the support portion and the top portion of the plurality of the protrusions serving as the plurality of the movable detection electrodes remains flush, and areas between adjacent movable detection electrodes are recessed as grooves.
(2) The top surface of the protrusions serving as the plurality of the detection electrodes remains unrecessed, and the areas between the adjacent movable detection electrodes and the area between at least the formation area of the plurality of the movable detection electrodes and the area of the support portion are recessed.
(3) In the surface configuration of (2), the top surface of the support portion remains flush with the top surface of the protrusions serving as the plurality of the movable detection electrodes.

The surface configurations of (1), (2), and (3) have their own advantages. The structure (1) facilitates the bonding of the support portion to the base member, because the surface of the support portion is not recessed. When the driving electrode, as the driver, is arranged on the surface of a planar base member to be opposed to the vibrator, the driving electrode and the vibrator can be closely placed because the surface of the support portion extending to the surface of the protrusions of the movable detection electrodes is kept to be flush. The required driving voltage is low.

The structure of (2) has recess areas not only between the adjacent movable detection electrodes but also between the formation area of the movable detection electrodes and the support portion. Since the mass at the end of the vibrator becomes larger than the mass at the center thereof, the vibrator is easy to vibrate. The detection sensitivity is thus increased.

Besides the advantages of the structure (2), the structure of (3) facilitates the bonding of the support portion of the vibrator to the base member, because the support portion of the vibrator is left to be flush.

As for the positional relationship between the movable detection electrode and the stationary detection electrode, the edges of the movable detection electrode and the stationary detection electrode are preferably placed to be out of alignment with each other by a distance not shorter than the maximum amplitude of the vibration of the vibrator in the displacement detection direction.

When the vibrator is subject to an angular velocity about the axis of rotation aligned with the longitudinal direction of the vibrator, the direction of the vibration of the vibrator, perpendicular to the driving direction, changes depending on whether the angular velocity is clockwise or counterclockwise. For instance, if the movable detection electrode is placed out of alignment with the stationary detection electrode, and when the vibrator is displaced in one direction, the facing areas between the movable detection electrode and the stationary detection electrode increases, thereby increasing capacitance therebetween. When the vibrator is displaced in the opposite direction, the facing areas between the movable detection electrode and the stationary detection electrode decreases, thereby reducing capacitance therebetween. The direction of the angular velocity is thus detected by checking whether the change in capacitance is positive or negative. It is thus preferred to arrange the movable detection electrode out of alignment with the stationary detection electrode. If the movable detection electrode is aligned with the stationary detection electrode with the edges thereof in alignment, the facing areas between the movable detection electrode and the stationary detection electrode decreases regardless of the direction of the displacement of the vibrator when the vibrator is displaced. Although the absolute value of the angular velocity can be detected, the direction of the angular velocity cannot be detected. Furthermore, a precise alignment of the movable detection electrode with the stationary detection electrode is difficult from the manufacturing standpoint.

An input device of the present invention incorporates the gyroscope of the present invention. With the gyroscope incorporated, a compact coordinates input device for a personal computer results.

In a third aspect of the present invention, a gyroscope includes a vibrator, fabricated of an electrically conductive material with the base end thereof serving as a support portion, a base member for supporting the support portion of the vibrator, a driver for driving the vibrator, a plurality of movable detection electrodes connected in parallel, each movable detection electrode formed of one of a plurality of protrusions of the vibrator, the plurality of the protrusions being formed by processing at least part of the surface of the end portion of the vibrator, each protrusion having a width not shorter than the amplitude of the vibration of the vibrator in the direction of the displacement detection, and a plurality of stationary detection electrodes connected in parallel for detecting the displacement of the vibrator, wherein the stationary detection electrodes are arranged on the base member to be opposed to the plurality of the movable detection electrodes so that a capacitance develops with the plurality of the movable detection electrodes opposed thereto, and each of the stationary detection electrodes has a width not shorter than the amplitude of the vibration of the vibrator in the direction of the displacement detection.

The gyroscope of this invention in the third aspect includes the plurality of the movable detection electrodes arranged on the vibrator and the plurality of the stationary detection electrodes arranged on the base member, and respectively opposed to the movable detection electrodes. The plurality of the movable detection electrodes are respectively formed of the plurality of the protrusions which are produced by processing at least part of the surface of the end portion of the vibrator. Each of the protrusions, connected in parallel, has a width not shorter than the amplitude of the vibration of the vibrator in the displacement direction. Each of the plurality of stationary detection electrodes, connected in parallel, has a width not shorter than the amplitude of the vibration of the vibrator in the displacement direction. Rather than using a movable detection electrode formed of a metal film on the surface of a vibrator, the present invention employs, as the movable detection electrode, the protrusion which is formed by processing the end portion of the vibrator of the electrically conductive material such as silicon in a protrusion and groove configuration. The protrusion, which is closer to the stationary detection electrode than the groove, functions as an electrode.

In accordance with the third aspect of the present invention, it suffices to arrange the stationary detection electrode on the base member to face the movable detection electrode on the vibrator. This arrangement eliminates the need for the arrangement of a detection electrode between legs, which would be required in the conventional art. The leg gap is thus minimized to a limit as small as the processing limit available in silicon processing. The Q factor is thus increased, the detection sensitivity is heightened, and the driving voltage is reduced. The device itself is miniaturized.

In a fourth aspect of the present invention, a gyroscope includes a vibrator, fabricated of an electrically conductive material with the base end thereof serving as a support portion, a base member for supporting the support portion of the vibrator, a driver for driving the vibrator, a plurality of movable detection electrodes connected in parallel, each movable detection electrode formed of one of a plurality of protrusions of the vibrator, the plurality of the protrusions being formed by processing at least part of the surface of the end portion of the vibrator, each protrusion having a width not shorter than the amplitude of the vibration of the vibrator in the direction of the displacement detection, and two groups of stationary detection electrodes, each group including a plurality of stationary detection electrodes, wherein the plurality of the stationary detection electrodes of the two groups are arranged on the base member to be opposed to the plurality of the movable detection electrodes so that a capacitance develops with the plurality of the movable detection electrodes opposed thereto, the outer edge of each of the plurality of the stationary detection electrodes in the one group outwardly overextends by at least a width equal to the maximum amplitude of the vibration of the vibrator in the direction of the displacement detection beyond the outer edge of each of the plurality of the movable detection electrodes opposed thereto, the outer edge of each of the plurality of the stationary detection electrodes in the other group outwardly overextends by at least a width equal to the maximum amplitude of the vibration of the vibrator in the direction of the displacement detection beyond the outer edge of each of the plurality of the movable detection electrodes opposed thereto, and each of the stationary detection electrodes has a width not shorter than the amplitude of the vibration of the vibrator in the direction of the displacement detection, and wherein a determination is made of a difference between the sum of capacitance developed between the plurality of the stationary detection electrodes in the one group and the plurality of the movable detection electrodes respectively opposed thereto and the sum of capacitance developed between the plurality of the stationary detection electrodes in the other group and the plurality of the movable detection electrodes respectively opposed thereto.

In accordance with the fourth aspect of the present invention, in a detection method of a change in capacitance, the gyroscope detects a difference between the sum of capacitance developed between the plurality of the stationary detection electrodes in the one group and the plurality of the movable detection electrodes respectively opposed thereto and the sum of capacitance developed between the plurality of the stationary detection electrodes in the other group and the plurality of the movable detection electrodes respectively opposed thereto. In other words, the gyroscope of the present invention uses a differential detection method for detecting a change in capacitance.

If the facing areas between the stationary detection electrodes in the one group and the movable detection electrodes respectively opposed thereto increase in response to the displacement of the vibrator in one direction, for instance, thereby increasing capacitance therebetween, the facing areas between the stationary detection electrodes in the other group and the movable detection electrodes respectively opposed thereto will decrease, thereby decreasing capacitance therebetween. When a difference is determined between the sum of capacitance developed between the plurality of the stationary detection electrodes in the one of the two groups and the plurality of the movable detection electrodes respectively opposed thereto and the sum of capacitance developed between the plurality of the stationary detection electrodes in the other group and the plurality of the movable detection electrodes respectively opposed thereto, initial values with no displacement taking place cancel each other because of their equal values. A change in capacitance on the one group is positive while a change in capacitance on the other group is negative, and the change only remains. This arrangement allows noise components contained in the initial capacitance values to cancel each other, thereby improving detection accuracy.

The driver may be a driving electrode on the base member, facing the vibrator. The driving electrode extends in the longitudinal direction of the vibrator, and is preferably arranged to be apart from the detection electrode to prevent stray capacitance from being created therebetween. If stray capacitance is created therebetween, the stray capacitance is detected together with a change in capacitance with the detection electrode when the angular velocity is detected. The stray capacitance becomes a noise component, thereby dropping S/N ratio. With the driving electrode spaced apart from the detection electrode, no such problem is presented.

Since the movable detection electrode is arranged on the end portion of the vibrator in the present invention, the stationary detection electrode is manufactured in the same manufacturing process as that for the tuning fork, and the interference between the stationary detection electrode and the driver is reduced.

As for the positional relationship between the movable detection electrode and the stationary detection electrode, the edges of the movable detection electrode and the stationary detection electrode in the displacement detection direction of the vibrator are preferably placed out of alignment with each other by a distance not shorter than the maximum amplitude of the vibration of the vibrator in the displacement detection direction.

When the vibrator is subject to an angular velocity about the axis of rotation aligned with the longitudinal direction of the vibrator, the direction of the vibration of the vibrator, perpendicular to the driving direction, changes depending on whether the angular velocity is clockwise or counterclockwise. For instance, if the movable detection electrode is placed out of alignment with the stationary detection electrode, and when the vibrator is displaced in one direction, the facing areas between the movable detection electrode and the stationary detection electrode increases, thereby increasing capacitance therebetween. When the vibrator is displaced in the opposite direction, the facing areas between the movable detection electrode and the stationary detection electrode decreases, thereby reducing capacitance therebetween. The direction of the angular velocity is thus detected by checking whether the change in capacitance is positive or negative. It is thus preferred to arrange the movable detection electrode out of alignment with the stationary detection electrode. If the movable detection electrode is aligned with the stationary detection electrode with the edges thereof in alignment, the facing areas between the movable detection electrode and the stationary detection electrode decreases regardless of the direction of the displacement of the vibrator when the vibrator is displaced. Although the absolute value of the angular velocity can be detected, the direction of the angular velocity cannot be detected. Furthermore, a precise alignment of the movable detection electrode with the stationary detection electrode is difficult from the manufacturing standpoint.

The number of the plurality of the stationary detection electrodes of each of the two groups is preferably equal to the number of the movable detection electrodes. Specifically, one from the one group and one from the other group are paired with each other and are opposed to one corresponding movable detection electrode. The width of the vibrator is thus effectively utilized.

Preferably, both the movable-detection electrode and the stationary detection electrode are fabricated of the same electrically conductive material. The surface of the electrically conductive material opposed to the movable detection electrode is processed to have the protrusions and grooves, and the facing protrusions thus serve as the stationary detection electrodes. This arrangement eliminates the need for the formation of a stationary detection electrode of metal film.

An input device of the present invention incorporates the gyroscope of the present invention. With the gyroscope incorporated, a compact coordinates input device for a personal computer results.

US Patent No 5,821,420 discloses a vibration type apparatus for measuring the angle of velocity using the Coriolis force exerted on a tuning fork.

It is an object of the present invention to provide an improved gyroscope.

An input device of the present invention incorporates the gyroscope of the present invention. With the gyroscope incorporated, a compact coordinates input device for a personal computer results.

According to the present invention there is provided a gyroscope comprising: a vibrator, fabricated of an electrically conductive material, with the base end thereof serving as a support portion; a base member for supporting the support portion of the vibrator; and a driver for driving the vibrator; characterised by a plurality of movable detection electrodes connected in parallel, each movable detection electrode formed of one of a plurality of protrusions of the vibrator, wherein the plurality of the protrusions are formed by processing at least part of the surface of the end portion of the vibrator, and each protrusion has a width not shorter than the maximum amplitude of the vibration of the vibrator in the direction of the displacement detection; and a plurality of stationary detection electrodes connected in parallel for detecting the displacement of the vibrator, wherein the stationary detection electrodes are arranged on the base member to be opposed to the plurality of the movable detection electrodes so that a capacitance develops with the plurality of the movable detection electrodes opposed thereto, and each of the stationary detection electrodes has a width not shorter than the maximum amplitude of the vibration of the vibrator in the direction of the displacement detection and wherein the facing areas between the movable detection electrodes and the stationary detection electrodes change in response to vibration in the direction of the displacement detection.

A gyroscope embodying the present invention will now be described by way of example, with reference to the accompanying diagrammatic drawings, in which:

FIG. 1 is an exploded perspective view showing the gyroscope of a first embodiment of the present invention;
FIG. 2 is a plan view of the gyroscope;
FIG. 3 is a sectional view of the gyroscope taken along line III-III of FIG. 2;
FIG. 4 is a sectional view of the gyroscope taken along line IV-IV in FIG. 2, showing the construction of the electrode of one leg in enlargement;
FIGS. 5A-5F are sectional views showing a sequence of the manufacturing steps of the gyroscope, in particular, of the manufacturing process of a glass substrate;
FIGS. 6A-6F are sectional views showing a sequence of manufacturing steps of the entire gyroscope;
FIG. 7 is an enlarged view showing the construction of the electrode of one leg of the gyroscope in accordance with a second embodiment of the present invention;
FIG. 8 is a sectional view of the gyroscope of a third embodiment of the present invention;
FIG. 9 is a sectional view of the gyroscope of a fourth embodiment of the present invention;
FIG. 10 is an exploded perspective view showing the gyroscope filed in the Japanese Patent Office by the assignee of this invention;
FIG. 11 is a sectional view of the gyroscope taken along line XI-XI in FIG. 10;
FIG. 12 is an exploded perspective view of the gyroscope of a fifth embodiment of the present invention;
FIG. 13 is a plan view of the gyroscope;
FIG. 14 is a sectional view of the gyroscope taken along line XIV-XIV in FIG. 13;
FIG. 15 is an enlarged plan view showing the construction of the electrode of one leg in the gyroscope;
FIGS. 16A-16F are sectional views showing a sequence of manufacturing steps of the gyroscope, in particular, of the manufacturing process of a glass substrate;
FIGS. 17A-17E are sectional views showing a sequence of manufacturing steps of the entire gyroscope;
FIG. 18 is an exploded perspective view of the gyroscope in accordance with a sixth embodiment of the present invention;
FIG. 19 is a plan view of the gyroscope;

FIG. 20 is an enlarged plan view showing the construction of the electrode of one leg of the gyroscope;

FIG. 21 is an enlarged plan view showing the construction of the electrode of one leg of the gyroscope in accordance with a seventh embodiment of the present invention;

FIG. 22 is an enlarged plan view showing the construction of the electrode of one leg of the gyroscope in accordance with an eighth embodiment of the present invention;

FIG. 23 is an enlarged plan view showing the construction of the electrode of one leg of the gyroscope in accordance with a ninth embodiment of the present invention;

FIG. 24 is a perspective view of a pen-type pointing device in accordance with the tenth embodiment of the present invention;

FIG. 25 is a plan view showing the arrangement of two gyroscopes used in the pen-type pointing device;

FIG. 26 is a front view showing the screen of a personal computer when the pen-type pointing device is operated; and

FIG. 27 is a perspective view showing a conventional gyroscope.

DESCRIPTION OF THE PREFERRED EMBODIMENTS

First embodiment

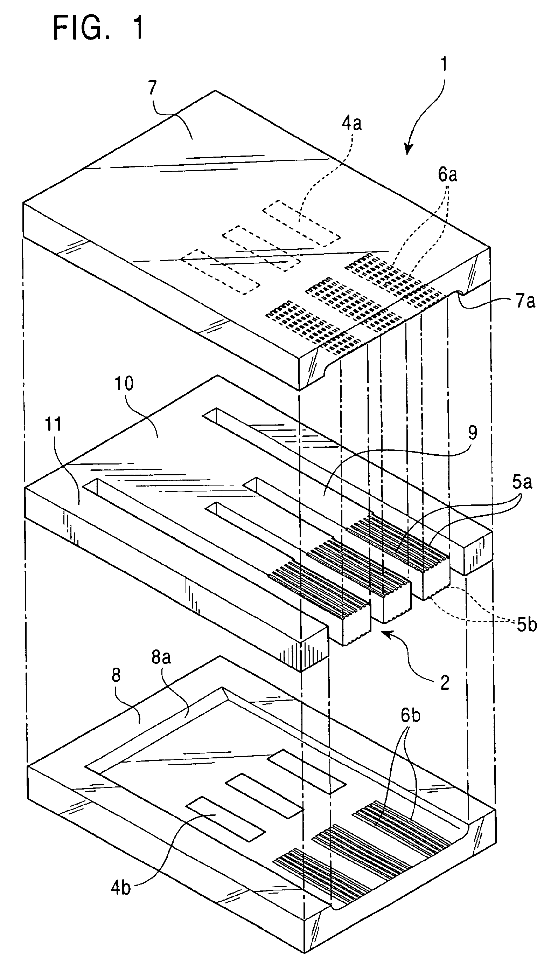

A first embodiment of the present invention is now discussed, referring to FIG. 1 through FIG. 6F.

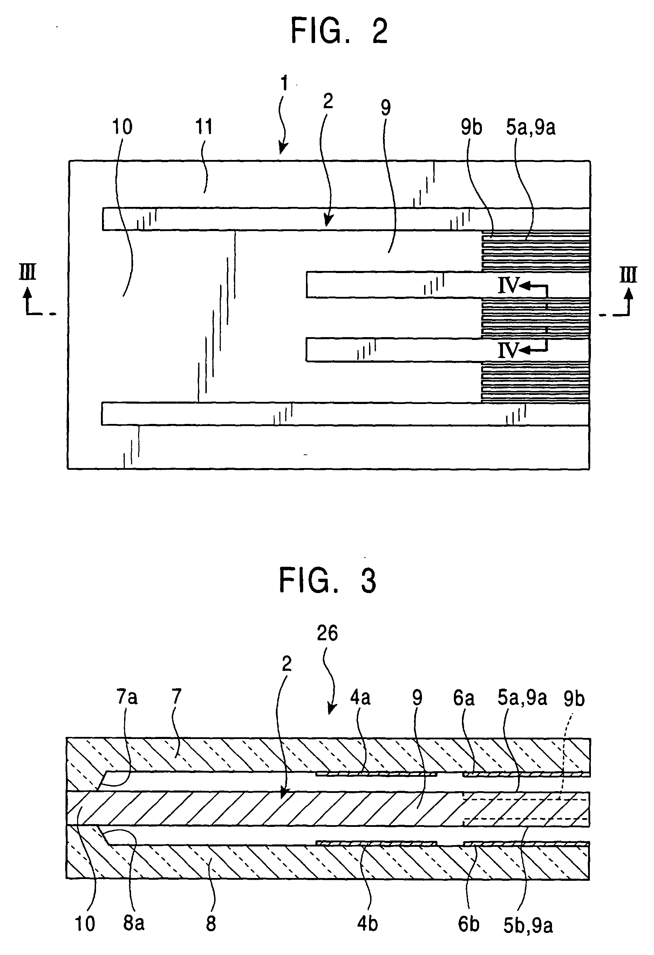

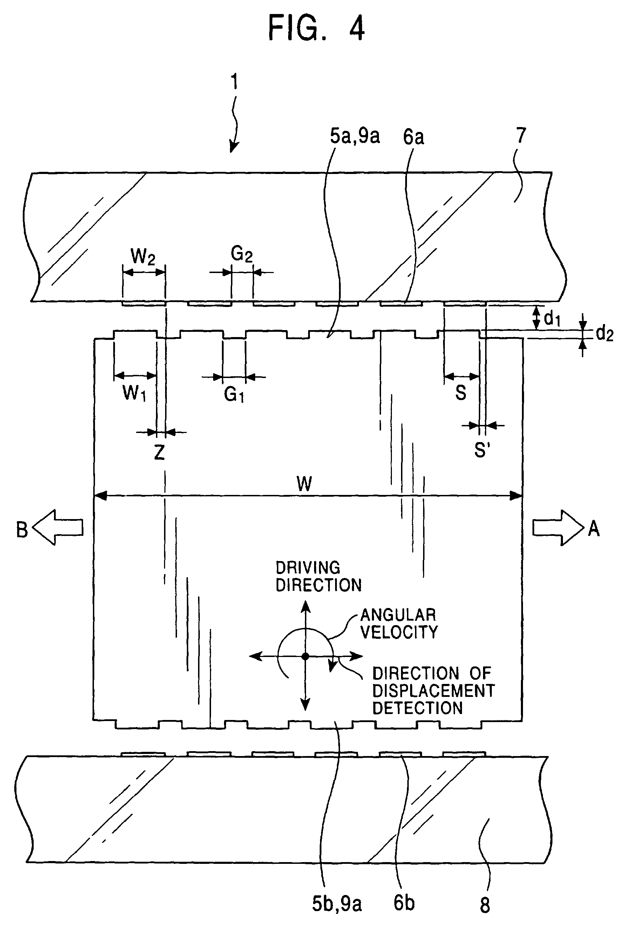

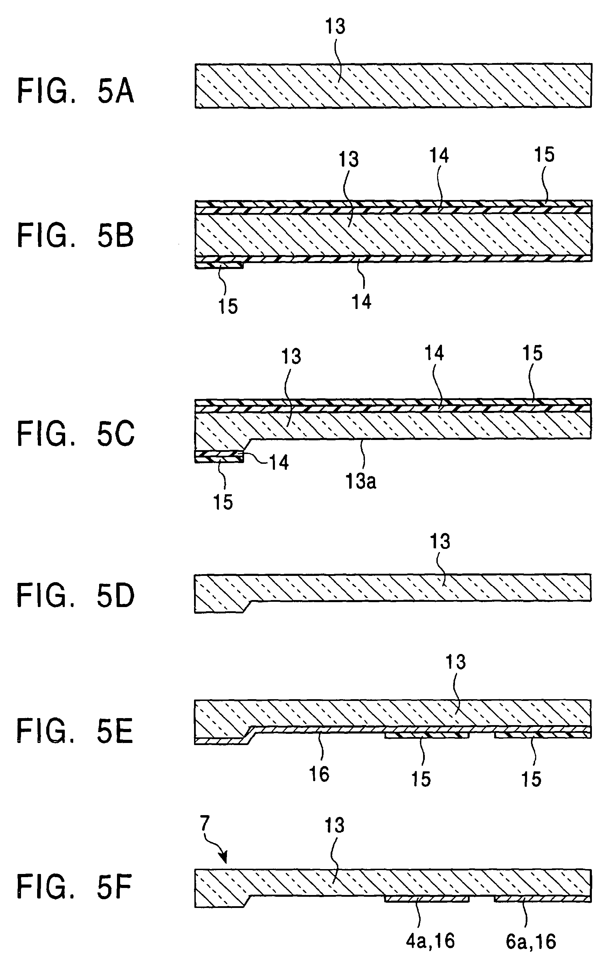

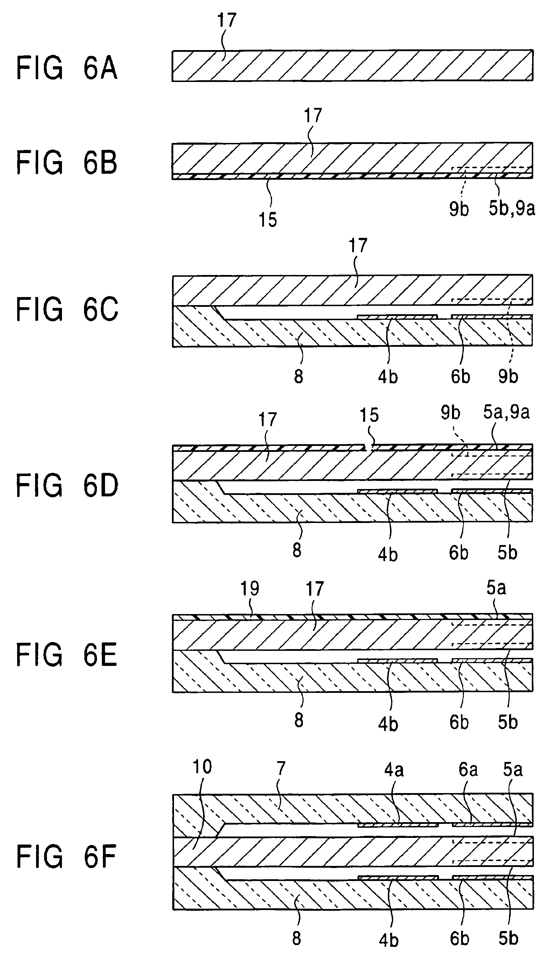

FIG. 1 is an exploded perspective view generally showing a gyroscope 1 of the first embodiment of the present invention, FIG. 2 is a plan view of the gyroscope (showing the electrode construction on the underside of an upper glass substrate), FIG. 3 is a sectional view of the gyroscope 1 taken along line III-III in FIG. 2, FIG. 4 is a sectional view of the gyroscope 1 taken along line IV-IV in FIG. 2 (showing the construction of the electrode of one leg in enlargement), FIGS. 5A-5F are sectional views showing a sequence of the manufacturing steps of the gyroscope, in particular, of the manufacturing process of a glass substrate, and FIGS. 6A-6F are sectional views showing a sequence of manufacturing steps of the entire gyroscope. Referring to FIG. 1, there are shown a tuning fork 2, stationary driving electrodes 4a and 4b, movable detection electrodes 5a and 5b, stationary detection electrodes 6a and 6b, an upper glass substrate (base member) 7 and a lower glass substrate (base member) 8.

Referring to FIG. 1 and FIG. 2, the gyroscope 1 of the first embodiment includes the three-legged tuning fork 2 having three legs 9 (vibrators), and a support portion 10 connecting the base sides of the legs 9. A frame 11 is arranged surrounding the tuning fork 2, and the tuning fork 2 and the frame 11 are produced from a 200 $\mu$m thick, single silicon substrate having electrical conductivity. Referring to FIG. 3, the support portion 10 is interposed and secured between the upper glass substrate 7 and the lower glass substrate 8. The two glass substrates 7 and 8 respectively have recess portions 7a and 8a, as deep as 10 $\mu$m, on their areas facing the tuning fork 2 from above and from below. With a gap of 10 $\mu$m allowed between each of the glass substrates 7 and 8 and the tuning fork 2, the leg 9 remains floating and vibratory.

Referring to FIG. 1 and FIG. 2, the upper glass substrate 7 has, on the underside thereof facing the base sides of the legs 9, stationary driving electrodes 4a extending in the longitudinal direction of the legs 9 on the basis of one driving electrode 4a for one leg 9. The stationary driving electrode 4a is fabricated of aluminum film, chromium film, or platinum/titanium film, each as thick as 300 nm. A line (not shown) for supplying the stationary driving electrode 4a with a driving signal is formed of the same layer as that for the stationary driving electrode 4a, and is thus fabricated of aluminum film, chromium film, or platinum/titanium film. The lower glass substrate 8 has, on the top surface thereof facing the base sides of the legs 9, stationary driving electrodes 4b extending in the longitudinal direction of the leg 9 on the basis of one driving electrode 4b for one leg 9. Since the legs 9 are fabricated of silicon having electrical conductivity, the legs 9 need no driving electrodes of their own, and a driver of the legs 9 is formed of capacitive coupling between the legs 9 and each of the stationary driving electrodes 4a and 4b.

Referring to FIG. 2 and FIG. 3, the end portion of each leg 9 is processed to have, on the top surface thereof, grooves 9b (recesses) extending in the longitudinal direction of the leg 9. Protrusions 9a between adjacent grooves 9b function as the movable detection electrodes 5a and 5b. Six movable detection electrodes 5a thus extend on each of the legs 9 in the longitudinal direction of the leg 9. The six movable detection electrodes 5a are thus integrally formed with the leg 9. This arrangement is electrically equivalent to a circuit that the six movable detection electrodes 5a are connected in parallel, and a line (not shown) for picking up a detected signal is formed. Similarly, each leg 9 has, on the underside thereof, six movable detection electrodes 5b extending in the longitudinal direction of the leg 9. Referring to FIG. 3, the tuning fork 2 has the surface, remaining flush and intact as the original silicon surface, extending from the top surface of the support portion 10 to the top surface of the protrusions 9a serving as the plurality of the movable detection electrodes 5a, and the area between the adjacent movable detection electrodes 5a forms the grooves 9b. The underside of the leg 9 has a similar construction.

Referring to FIG. 3, the upper glass substrate 7 has, on the underside area closer to the end of the leg 9 than the formation area of the stationary driving electrode 4a, six stationary detection electrodes 6a for each leg 9 to be respectively opposed to the movable detection electrodes 5a on the top surface of the leg 9. As the stationary driving electrode 4a are, the stationary detection electrodes 6a are also fabricated of aluminum film, chromium film, or platinum/titanium film. The six stationary detection electrodes 6a are connected in parallel, and a line (not shown) for picking up a detected signal is formed. Similarly, the lower glass substrate 8 has, on the top surface thereof closer to the end of the leg 9 than the formation area of the stationary driving electrode 4b, six stationary detection electrodes 6b for each leg 9 to respectively be opposed to the movable detection electrodes 5b on the underside of the leg 9.

Referring to FIG. 4, the movable detection electrodes 5a on the top surface of the leg 9 are opposed to the stationary detection electrodes 6a on the upper glass substrate 7, and the movable detection electrodes 5b on the underside of the leg 9 are opposed to the stationary detection electrodes 6b on the upper glass substrate 7. However, the movable detection electrodes 5a and 5b are opposed to the stationary detection electrodes 6a and 6b with their edges out of alignment with each other in the displacement detection direction of the leg 9. The edges of the movable detection electrodes 5a and 5b and the edges of the stationary detection electrodes 6a are out of alignment by at least a width equal to the maximum amplitude in the displacement detection direction of the leg 9. The width W1 of the movable detection electrodes 5a and 5b and the width W2 of the stationary detection electrodes 6a and 6b are both set to be not shorter than the maximum amplitude of the vibration of the leg 9.

For instance, the gyroscope 1 is dimensioned as follows: the width W of the leg 9 is 200 $\mu$m, the width W1 of each of the movable detection electrodes 5a and 5b and the width W2 of each of the stationary detection electrodes 6a and 6b are both 20 $\mu$m, the gap G1 between the movable detection electrodes 5a and 5b and the gap G2 between the stationary detection electrodes 6a and 6b are both 10 $\mu$m, and the overextension in width Z between the edge of each of the movable detection electrodes 5a and 5b and the edge of each of the stationary detection electrodes 6a and 6b is 5$\mu$m. The maximum amplitude of the vibration of the leg 9 in the displacement detection direction is set to be 1 $\mu$m.

Equipotential traces (not shown), fabricated of the same layer of aluminum film, chromium film, or platinum/titanium film, as that for the stationary driving electrodes 4a and 4b and the stationary detection electrodes 6a and 6b, are formed on the inner surface of the upper glass substrate 7 and the inner surface of the lower glass substrate 8, other than the formation area of the stationary driving electrodes 4a and 4b and the stationary detection electrodes 6a and 6b. Although the equipotential traces are not functionally required by the gyroscope 1, these traces are still required for the convenience of manufacturing process to be discussed later.

The method of manufacturing the gyroscope 1 having the above construction is now discussed. The method of manufacturing the upper glass substrate 7 and the lower glass substrate 8 is first discussed, referring to FIGS. 5A through 5F.

A glass substrate 13 is first prepared as shown in FIG. 5A. After cleaning it, the glass substrate 13 is subjected to a sputtering process to form a chromium layer 14 on both sides thereof as shown in FIG. 5B. A resist pattern 15 is formed on the chromium layer 14, and the chromium layer 14 is etched away with the resist pattern 15 used as a mask. Referring to FIG. 5C, the glass substrate 13 is etched using hydrofluoric acid with the resist pattern 15 and the patterned chromium layer 14 used as a mask. The recess 13a as deep as 10 $\mu$m or so is formed on the glass substrate 13 in the area thereof facing the tuning fork. As shown in FIG. 5D, the resist pattern 15 and the chromium layer 14 are removed. Referring to FIG. 5E, a metal layer 16, as thick as 300 nm, such as of aluminum film or chromium film is formed on one side of the glass substrate 13 through the sputtering process. A resist pattern 15 is formed thereon, and the metal layer 16 is etched with the resist pattern 15 used as a mask. The stationary driving electrodes 4a, the stationary detection electrodes 6a, and the equipotential traces are formed. The manufacturing of the upper glass substrate 7 and the lower glass substrate 8 is thus complete through the above manufacturing steps.

Referring to FIG. 6A, a silicon substrate 17 is prepared. Referring to FIG. 6B, a resist pattern 15 is formed on one side of the silicon substrate 17, covering the silicon substrate 17 other than the area to be recessed as the grooves 9b between the movable detection electrodes 5b. The silicon substrate 17 is etched, forming the grooves 9b between the movable detection electrodes 5b. In this way, the surface of the silicon substrate 17 between the grooves 9b and extending to the area of the support portion 10 remains intact and flush. The protrusions 9a between the grooves 9b become the movable detection electrodes 5b.

After peeling the resist pattern 15 off, the silicon substrate 17 on the underside thereof is bonded to the lower glass substrate 8 using anodic bonding as shown in FIG. 6C. The silicon substrate 17 and lower glass substrate 8 are bonded to each other with the grooves 9b of the silicon substrate 17 opposed to the lower glass substrate 8. An area of the silicon substrate 17 becoming the support portion 10 is the bonding surface. In the anodic bonding, silicon and glass are easily bonded with the silicon substrate supplied with a positive voltage and the glass substrate supplied with a negative voltage. The area of the silicon substrate 17 becoming the tuning fork 2 is spaced from the surface of the lower glass substrate 8 by only 10 $\mu$m or so. If the silicon substrate 17 is deflected into contact with the lower glass substrate 8 by the electrostatic attractive force during anodic bonding, both substrates are also bonded there. The production of a vibratory tuning fork 2 will thus fail. To prevent the area of the silicon substrate 17, which must be free from contact with the lower glass substrate 8, from being put into contact therewith, the area of the lower glass substrate 8 corresponding to the area of the silicon substrate 17 is equalized in potential to the silicon substrate 17. For this purpose, the equipotential trace is deposited on the surface of the lower glass substrate 8. Similarly, the equipotential trace is deposited on the upper glass substrate 7.

Referring to FIG. 6D, a resist pattern 15 is deposited on the silicon substrate 17, covering the area other than the area becoming the grooves 9b between the adjacent movable detection electrodes 5a. The silicon substrate 17 is etched to form the grooves 9b between the adjacent movable detection electrodes 5a, and the movable detection electrodes 5a are thus formed. The leg 9 is thus provided with the movable detection electrodes 5a and 5b respectively on the top surface and the underside thereof. In the first embodiment, the manufacturing process is performed in the order of the formation of the movable detection electrodes 5b on the underside of the leg 9, the anodic bonding, the formation of the movable detection electrodes 5a on the top surface of the leg 9. Alternatively, the manufacturing process may proceed in the order of the formation of the movable detection electrodes 5b on the underside of the leg 9, the formation of the movable detection electrodes 5a on the top side of the leg 9, and the anodic bonding.

After peeling the resist pattern 15 off, a resist pattern 19 is formed on the surface of the silicon substrate 17 as shown in FIG. 6E. The resist pattern 19 in plan view is shaped to result in the tuning fork 2, the support portion 10, the frame 11, etc in silicon as shown in FIG. 2. With the resist pattern 19 used as a mask, the silicon substrate 17 is etched away using anisotropic etching such as reactive ion etching. The tuning fork 2, the support portion 10, the frame 11, etc are thus formed, and the tuning fork 2 remains floating in air above the lower glass substrate 8. The resist pattern 19 is then peeled off.

Referring to FIG. 6F, the upper glass substrate 7 is bonded to the top surface of the silicon substrate 17, which is already bonded to the lower glass substrate 8 through anodic bonding. As shown, the silicon substrate 17 on the support portion 10 of the tuning fork 2 thereof bonds to the upper glass substrate 7. The manufacturing of the gyroscope 1 of this embodiment is thus complete.

To use the gyroscope 1 of the first embodiment, an oscillator as a driving source is connected to the lines for the stationary driving electrode 4a and 4b, and a capacitance detector is connected between the signal pickup lines for the movable detection electrodes 5a and 5b, and the signal pickup lines for the stationary detection electrodes 6a and 6b. When a voltage of several kHz is applied between the tuning fork 2 and the stationary driving electrodes 4a and 4b with the oscillator running, each leg 9 of the tuning fork 2 vertically vibrates. When an angular velocity is applied about the axis rotation aligned with the longitudinal direction of the leg 9, the leg 9 vibrates with an amplitude responsive to the magnitude of the angular velocity in a horizontal direction. The movable detection electrodes 5a and 5b of each leg 9 of the tuning fork 2, the stationary detection electrodes 6a on the upper glass substrate 7, and the stationary detection electrodes 6b on the lower glass substrate 8 are opposed to each other, and the facing areas between the movable detection electrodes 5a and 5b and the stationary detection electrodes 6a and 6b change in response to the horizontal vibration of the leg 9, thereby causing a change in capacitance. The capacitance detector detects the change in capacitance, thereby detecting the magnitude of the angular velocity.

In the first embodiment, the edges of the movable detection electrodes 5a and 5b are laterally overextended from the edges of the stationary detection electrodes 6a and 6b as shown in FIG. 4. When the leg 9 is displaced rightwardly (in the direction as represented by an arrow A) with respect to the glass substrates 7 and 8 as shown in FIG. 4, the facing areas between the movable detection electrodes 5a and 5b and the stationary detection electrodes 6a and 6b increase, thereby increasing the capacitance therebetween. When the leg 9 is displaced leftwardly (in the direction as represented by an arrow B) with respect to the glass substrates 7 and 8, the facing areas between the movable detection electrodes 5a and 5b and the stationary detection electrodes 6a and 6b decrease, thereby decreasing the capacitance therebetween. The direction of the angular velocity is thus determined by detecting whether the change in capacitance is positive and negative.

The gyroscope 1 of the first embodiment eliminates the need for the arrangement of a detection electrode between legs, which would be required in the conventional gyroscopes. As a result, the leg gap is minimized to the manufacturing limit available in the process of silicon substrates, for instance, to several tens of µm. The Q factor is thus increased. If the leg gap is within a range from 300 µm to 400 µm in a gyroscope having a leg width of 200 µm, the Q factor is approximately 1000. If the leg gap is narrowed to several tens of µm, the Q factor is doubled, becoming 2000 or so. With an increase in the Q factor, the detection sensitivity is increased in the gyroscope as an angular velocity sensor, and the required driving voltage is lowered. Furthermore, the device itself is made compact.

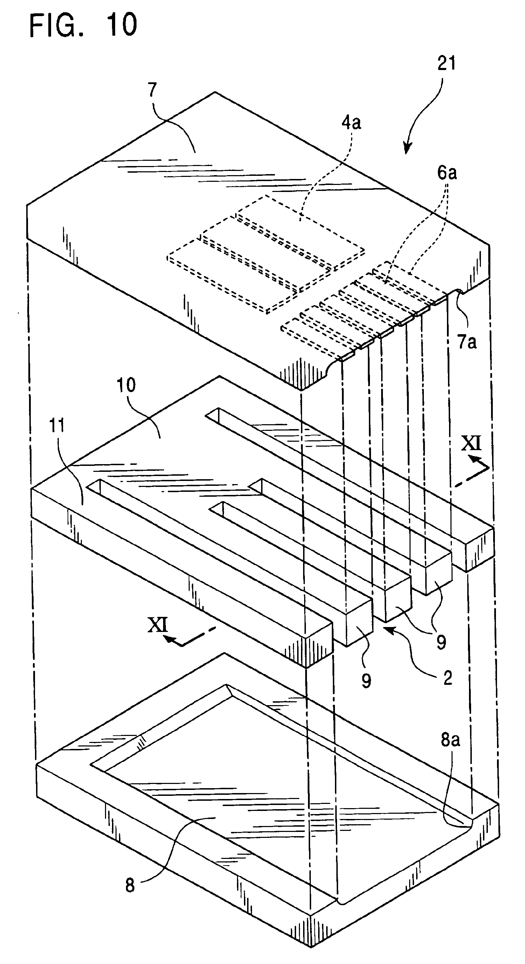

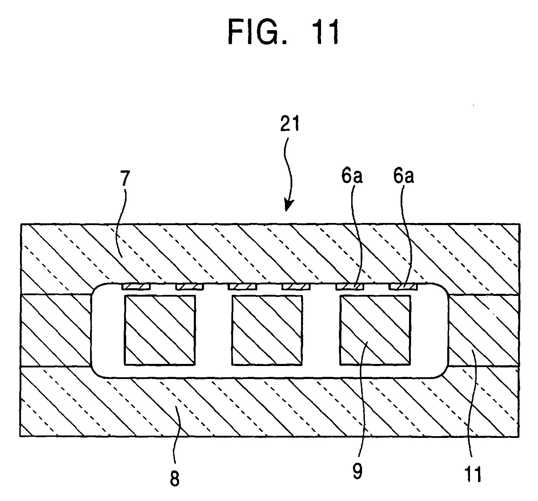

A gyroscope having a different construction intended to achieve the same object as that of the present invention has been filed in the Japanese Patent Office by the assignee of the present invention. The gyroscope of the present invention is a modified version of the gyroscope, and present the following advantages over the disclosed gyroscope. FIG. 10 is an exploded perspective view showing the entire gyroscope filed in the Japanese Patent Office by the assignee of this invention, and FIG. 11 is a sectional view of the gyroscope taken along line XI-XI in FIG. 10. In FIG. 10 and FIG. 11, components identical to those described with reference to FIG. 1 through FIG. 4 are designated with the same reference numerals.

Unlike the gyroscope 1 in the first embodiment, a gyroscope 21 shown in FIG. 10 and FIG. 11 includes two stationary detection electrodes 6a for one leg 9 on the underside of the upper glass substrate 7. Since the leg 9, fabricated of silicon, functions as an electrode, the leg 9 has neither driving electrode nor detection electrode.

The gyroscope 1 in the first embodiment includes a total of 12 pairs of movable detection electrodes 5a and 5b and stationary detection electrodes 6a and 6b on a per leg basis. The movable detection electrodes 5a and 5b are connected in parallel and the stationary detection electrodes 6a and 6b are connected in parallel. Now let $C_1$, $C_2$,..., $C_{12}$ represent capacitances formed of the 12 electrode pairs of the movable detection electrodes 5a and 5b and stationary detection electrodes 6a and 6b.

When no angular velocity is input to the leg 9 with no Coriolis force generated, the displacement is zero (in an initial state). Let $C_{dt1}$ represent a capacitance for one leg, and

$$C_{dt1} = C_1 + C_2 + \ldots + C_{12} \qquad \ldots \quad (3)$$

Let $C_{dt2}$ represent the capacitance of the leg when a displacement occurs through the Coriolis force with an angular velocity input to the leg 9, and

$$C_{dt2} = (C_1 + \Delta C_1) + (C_2 + \Delta C_2) + \ldots + (C_{12} + \Delta C_{12}) \ldots \quad (4)$$

where $\Delta C_1$, $\Delta C_2$,..., $\Delta C_{12}$ are changes in the capacitances.

Equation (4) is written as the following equation (5).

$$C_{dt2} = \sum_{i=1}^{12} C_i + \sum_{i=1}^{12} \Delta C_i$$

$$\ldots \quad (5)$$

If n detection electrodes are arranged on a single leg, equation (5) becomes the following equation (6).

$$C_{dt2} = \sum_{i=1}^{n} C_i + \sum_{i=1}^{n} \Delta C_i$$

$$\ldots \quad (6)$$

For example, $C_{dt1}$ is set to be 1 pF, and $\Delta C_i$ ranges from 0.01 to 0.1 pF.

Since the gyroscope 21 shown in FIG. 10 and FIG. 11 has two detection electrodes 6a for one leg 9, n is 2 in equation (6). A change in capacitance per leg falls within a range from 0.02 to 0.2 pF. In the gyroscope 1 of the first embodiment, n is 12 in equation (6), and a change in capacitance per leg falls within a range from 0.12 to 1.2 pF. Given the same angular velocity and the same displacement in the leg 9, the gyroscope 1 of the first embodiment results in a capacitance change six times as large as that in the gyroscope 21, in other words, the gyroscope 1 of the first embodiment provides the sensitivity six times as good as that of the gyroscope 21. If n detection electrodes are arranged for one leg 9, a resulting sensitivity is n/2 times better than the sensitivity of the gyroscope 21. The gyroscope 1 of the first embodiment thus offers a better detection sensitivity.

The height of the protrusions 9a forming the movable detection electrodes 5a and 5b of the first embodiment is now discussed.

Referring to FIG. 4, now let S represent the facing areas between the movable detection electrodes 5a and 5b and the stationary detection electrodes 6a and 6b, S' represent the areas of the movable detection electrodes 5a and 5b and the stationary detection electrodes 6a and 6b not opposed to each other in the initial state, $d_1$ represent the gap between the movable detection electrodes 5a and 5b and the stationary detection electrodes 6a and 6b, and $d_2$ represent the height of the movable detection electrodes 5a and 5b.

Capacitance $C_0$ per electrode in the initial state with no displacement taking place in the leg 9 is expressed by the following equation (7).

$$C_0=\varepsilon_0\varepsilon \ (S/d_1) \ + \ \varepsilon_0\varepsilon \ (S'/(d_1+d_2)) \ \cdots \qquad (7)$$

Capacitance $C_1$ with the leg 9 displaced for an area increase of S' is

$$C_1=\varepsilon_0\varepsilon \ (S/d_1) \ + \ \varepsilon_0\varepsilon \ (S'/d_1) \qquad \cdots \qquad (8)$$

wherein $\varepsilon_0\varepsilon$ is a dielectric constant in space between the electrodes.
From equations (7) and (8), a change in capacitance $\Delta C$ per electrode is

$$\Delta C=C_1-C_0$$
$$= \varepsilon_0\varepsilon \ (S'/d_1) \ - \ \varepsilon_0\varepsilon \ (S'/(d_1+d_2))$$
$$= \varepsilon_0\varepsilon \ S'[(1/d_1)-\{1/(d_1+d_2)\}] \qquad \cdots \quad (9)$$

From equation (9), the condition under which the gyroscope of this invention presents a higher capacitance change with n electrodes incorporated than the gyroscope 21 shown in FIG. 10 and FIG. 11 is determined as expressed by the following equation (10).

$$n[(1/d_1)-\{1/(d_1+d_2)\}] \ > \ 2 \ x \ (1/d_1) \ \cdots \quad (10)$$

Since n=6 in this embodiment,

$$6[(1/d_1)-\{1/(d_1+d_2)\}] \ > \ 2 \ x \ (1/d_1)$$
$$d_2 \ > \ 1/2 \ x \ d_1 \qquad\qquad\qquad \cdots \quad (11)$$

Preferably, the height $d_2$ of the protrusion of the movable detection electrode is greater than half $d_1$, i.e., greater than the gap between the movable detection electrodes 5a and 5b and the stationary detection electrodes 6a and 6b. For instance, the gap between the movable detection electrodes 5a and 5b and the stationary detection electrodes 6a and 6b is 10 $\mu$m, the height of the protrusion 9a (namely, the depth of the groove 9b, or the etch depth in the etch operation) is preferably greater than 5 $\mu$m.
In the gyroscope 1 of the first embodiment, the tuning fork 2 is clamped between the two glass substrates 7 and 8, and the tuning fork 2 is easy to handle because it is protected by the two glass substrates 7 and 8. With its construction less susceptible to dust entry, the tuning fork 2 is free from external disturbance, and detection accuracy is thus assured. The construction described above permits vacuum packaging, and the Q factor is even more improved with the vacuum packaging.
In the first embodiment, the movable detection electrodes 5a and 5b are formed on the top surface of and the underside of the leg 9 to increase the number of the electrodes. Alternatively, the movable detection electrodes may be formed on one of the top surface and the underside of the leg 9.

Second embodiment

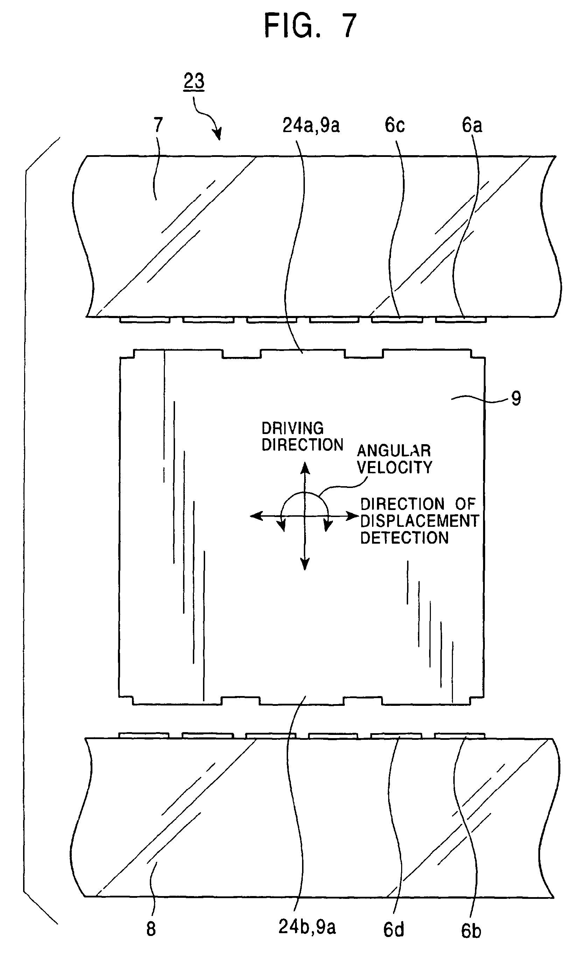

A second embodiment of the present invention is now discussed, referring to FIG. 7.
FIG. 7 is an enlarged view showing the construction of the electrode of one leg of a gyroscope 23 in accordance with the second embodiment of the present invention. The basic construction of the gyroscope 23 of the second embodiment remains unchanged from that of the first embodiment. The difference of the second embodiment from the first embodiment lies in the number of electrodes per leg. In FIG. 7, components identical to those described with reference to FIG. 4 are designated with the same reference numerals, and the discussion thereof is not repeated. The difference only is discussed.

In the first embodiment, for one leg 9, the six movable detection electrodes 5a and the six movable detection electrodes 5b are respectively formed on the top surface and the underside of the leg 9, and the six stationary detection electrodes 6a and the six stationary detection electrodes 6b are arranged on the underside of the upper glass substrate 7 and on the top surface of the lower glass substrate 8. In contrast, the gyroscope 23 of the second embodiment includes three movable detection electrodes 24a and three movable detection electrodes 24b on the top surface and on the underside of the leg 9, and six stationary detection electrodes 6a and 6c on the underside of the upper glass substrate 7 and the six stationary detection electrodes 6b and 6d on the top surface of the lower glass substrate 8.

The movable detection electrodes 24a formed of three protrusions 9a extend on the top surface of the leg 9 on the area closer to the end of the leg 9 in the longitudinal direction of the leg 9. Similarly, the three movable detection electrodes 24b extend on the underside of the leg 9 in the longitudinal direction of the leg 9. The six stationary detection electrodes 6a and 6c are arranged on the underside of the upper glass substrate 7 on the area closer to the end of the leg 9 than the formation area of the stationary driving electrode 4a so that every two (one pair of) stationary detection electrodes 6a and 6c are opposed to one movable detection electrode 24a, thus, six (three pairs of) stationary detection electrodes 6a and 6c opposed to one leg 9. The six stationary detection electrodes 6a and 6c per leg are connected in parallel on an every two electrodes basis, forming two groups of electrodes (one group designated 6a and the other group designated 6c). A signal pickup line (not shown) for detected signal is extended from each of the two electrode groups, each of which is composed a plurality of electrodes connected in parallel. In the second embodiment, the stationary detection electrodes 6a and 6c include the two electrode groups, and the number of electrodes (three) in each group is equal to the number of the movable detection electrodes 24a (three). The electrodes in the group 6a are connected in parallel and the electrodes in the group 6c are connected in parallel. Similarly, the lower glass substrate 8 has, on the top surface thereof, six stationary detection electrodes 6b and 6d, with every two (one pair of) of stationary detection electrodes opposed to one movable detection electrode 24b.

Referring to FIG. 7, the movable detection electrodes 24a and 24b on the leg 9 are respectively opposed to the corresponding paired stationary detection electrodes 6a, 6b, 6c, and 6d on the upper glass substrate 7 and the lower glass substrate 8. The edges of each of the movable detection electrodes 24a and 24b (the left edge and right edge thereof in FIG. 7) are not respectively aligned with the outer edges of a pair of the stationary detection electrode 6a and 6c, 6b and 6d, in the displacement detection direction in the leg 9. Each pair of the stationary detection electrodes 6a, 6c, 6b, and 6d extend outwardly beyond the respective edges of the movable detection electrodes 24a and 24b by a distance equal to or larger than the maximum amplitude of the vibration of the leg 9. The width W1 of the movable detection electrodes 24a and 24b and the width W2 of the stationary detection electrodes 6a, 6b, 6c, and 6d are both set to be not shorter than the maximum amplitude of the leg 9.

For instance, the gyroscope 23 is dimensioned as follows: the width W of the leg 9 is 200 $\mu$m, the width W1 of each of the movable detection electrodes 24a and 24b is 35 $\mu$m, the gap G1 between the movable detection electrodes 24a and 24b is 15 $\mu$m, the width W2 of each of the stationary detection electrodes 6a, 6b, 6c, and 6d is 20 $\mu$m, the gap G2 between the stationary detection electrodes 6a, 6b, 6c, and 6d is 5 $\mu$m, and the overextension in width Z of the outer edges of each pair of the stationary detection electrodes 6a, 6b, 6c, and 6d beyond the outer edges of the movable detection electrodes 24a and 24b is 5 $\mu$m wide. The maximum amplitude of the vibration of the leg 9 in the displacement detection direction is set to be 1 $\mu$m. The overextension in width of one edge of one pair of the stationary detection electrodes 6a, 6c, 6b, and 6d beyond one outer edge of the corresponding one of the movable detection electrodes 24a and 24b is set to be equal to the overextension in width of the other edge of the one pair of the stationary detection electrodes 6a, 6c, 6b, and 6d beyond the other outer edge of the corresponding one of the movable detection electrodes 24a and 24b. It suffices to set the two overextensions in width to be not shorter than the maximum amplitude of the leg 9, and there is no need for equalizing the two overextensions in width.

To use the gyroscope 23 of the second embodiment, an oscillator as a driving source is connected between the tuning fork 2 and the lines for the stationary driving electrode, a first capacitance detector is connected between the line for the movable detection electrodes 24a and 24b and the line for the one electrode group including the stationary detection electrodes 6a and 6b, and a second capacitance detector is connected between the line for the movable detection electrodes 24a and 24b and the line for the other electrode group including the stationary detection electrodes 6c and 6d. When a voltage of several kHz is applied between the tuning fork 2 and the stationary driving electrodes with the oscillator running, each leg 9 of the tuning fork 2 vertically vibrates. When an angular velocity is applied about the axis rotation aligned with the longitudinal direction of the leg 9, the leg 9 vibrates, with an amplitude responsive to the magnitude of the input angular velocity, in a horizontal direction. The movable detection electrodes 24a and 24b of each leg 9 of the tuning fork 2, the pair of stationary detection electrodes 6a and 6c on the upper glass substrate 7, and the pair of the stationary detection electrodes 6b and 6d on the lower glass substrate 8 are opposed to each other, and the facing areas between the movable detection electrodes 24a and 24b and the stationary detection electrodes 6a, 6b, 6c, and 6d change in response to the horizontal vibration of the leg 9, thereby causing a change in capacitance. The first capacitance detector and second capacitance detector differentially detect change in capacitance, thereby detecting the magnitude of the angular velocity.

The gyroscope 23 of the second embodiment eliminates the need for the arrangement of a detection electrode between legs, which would be required in the conventional gyroscopes. As a result, the leg gap is minimized, and the Q factor is thus increased. With an increase in the Q factor, the detection sensitivity is increased in the gyroscope as an angular velocity sensor, and the required driving voltage is lowered. Furthermore, the device itself is made compact. The second embodiment thus provides the same advantages as those of the first embodiment. Like the first embodiment, the second embodiment increases the detection sensitivity.

Since the second embodiment adopts the differential detection method, initial capacitance values cancel each other through the differential operation because the sums of the initial capacitances of the two groups are equal to each other. A change in capacitance remains through the differential operation. Since noise components contained in the initial capacitance values are canceled, the detection accuracy is improved. In the second embodiment, the stationary detection electrodes 6a, 6b, 6c, and 6d are divided into the two electrode groups, and the number of electrodes (three) in each group is equal to the number of the movable detection electrodes 24a or 24b (three). The stationary detection electrodes 6a and 6c are paired and opposed to the corresponding movable detection electrode 24a, and the stationary detection electrodes 6b and 6d are paired and opposed to the corresponding movable detection electrodes 24b. The width of the leg 9 is most effectively used.

Third embodiment

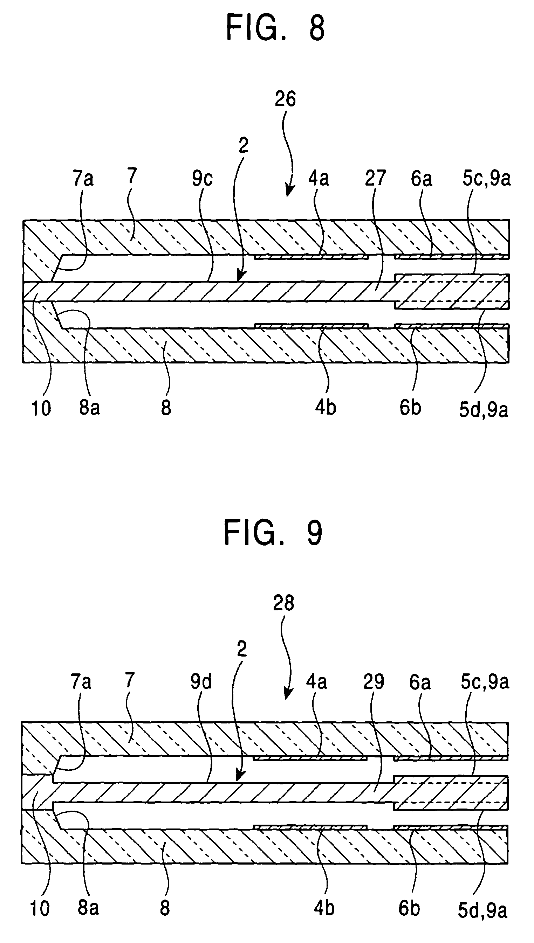

A third embodiment of the present invention is now discussed, referring to FIG. 8.

FIG. 8 is a sectional view, showing a gyroscope 26 of the third embodiment, and corresponding to the sectional view of the gyroscope of the first embodiment shown in FIG. 3. The third embodiment and a fourth embodiment to be discussed later are identical to the gyroscope of the first and second embodiment in basic construction. The third and fourth embodiments are different from the preceding embodiments, of how wide and how long the protrusions extend on the leg. In FIG. 8, components identical to those described with reference to FIG. 3 are designated with the same reference numerals, and the discussion thereabout is not repeated and the difference only is discussed below.

In the first embodiment shown in FIG. 3, the tuning fork 2 has the surface, left flush and intact as the original silicon surface, extending from the top surface of the support portion 10 to the top surface of the protrusions 9a serving as the plurality of the movable detection electrodes 5a, and the area between the adjacent movable detection electrodes 5a forms the grooves 9b. In contrast, in the third embodiment as shown in FIG. 8, the original silicon surface remains as only the protrusions 9a forming movable detection electrodes 5c and 5d on a leg 27, and the remaining areas, namely, the area between the movable detection electrodes 5c and 5d, and the area between the formation area of the movable detection electrodes 5c and 5d and the support portion 10 are etched to a recess 9c.

In the third embodiment, not only the area between the movable detection electrodes 5c and 5d, but also the area between the formation area of the movable detection electrodes 5c and 5d and the support portion 10 are etched to the recess 9c. Since the mass at the end portion of the leg 27 is heavier than the mass at the central portion of the leg 27 in this arrangement, the leg 27 is easy to vibrate, thereby increasing the detection sensitivity of the gyroscope.

Fourth embodiment

A fourth embodiment of the present invention is now discussed, referring to FIG. 9.

In FIG. 9, components identical to those described with reference to FIG. 3 are designated with the same reference numerals, and the discussion thereabout is not repeated. The difference only is discussed below.

In the third embodiment, the original silicon surface is left as only the top surface of the protrusions 9a forming the movable detection electrodes 5c and 5d and the remaining areas are etched to the recess 9c. In the fourth embodiment, besides the top surface of the protrusions 9a forming the movable detection electrodes 5c and 5d on a leg 29, the original silicon surface remains as the support portion 10. The area between the movable detection electrodes 5c and 5d, and the area between the formation area of the movable detection electrodes 5c and 5d and the support portion 10 are etched to a recess 9d.

Since the mass at the end portion of the leg 29 is heavier than the mass at the central portion of the leg 29 in this arrangement as in the third embodiment, the leg 29 is easy to vibrate, thereby increasing the detection sensitivity of the gyroscope. In addition, since the original silicon surface remains as the top surface of the support portion 10 of the leg 29, the silicon substrate and the glass substrate are easy to bond in anodic bonding. A firm bond thus results.

The scope of the present invention is not limited to the preceding embodiments. Various changes and modifications are possible without departing from the scope of the present invention. For instance, the number electrodes in each of the above embodiments be optionally set. As long as the gyroscope can be processed, the more the number of electrodes, the better, from the sensitivity standpoint. The formation area of the detection electrodes may be different from leg to leg. For instance, the detection electrode may be mounted on the top surface of a first leg, the bottom surface of a second leg, and the top surface of a third leg.

The preceding embodiments employ a three-legged tuning fork, but the present invention is not limited to the three-legged type. Alternatively, a one-legged tuning fork may be used.

Instead of clamping the tuning fork fabricated of silicon between the two glass substrates, the upper glass substrate may be dispensed with. This arrangement leads to a gyroscope having a simpler construction. Silicon and glass are compatible with each other in the anodic bonding, and the glass substrate may be replaced with a substrate of a different material having a fused glass coating. As the material of the tuning fork, carbon may be substituted for silicon. To easily bond the three substrates of two base members and the tuning fork interposed between the two base members, the material of the tuning fork is preferably silicon and the material of the base member is preferably glass as discussed in connection with the first through fourth embodiments. If the anodic bonding is not used, all three substrates can be fabricated of silicon. The materials and dimensions of the components used in the preceding embodiments are not limited to those described, and may be modified as appropriate.

Fifth embodiment

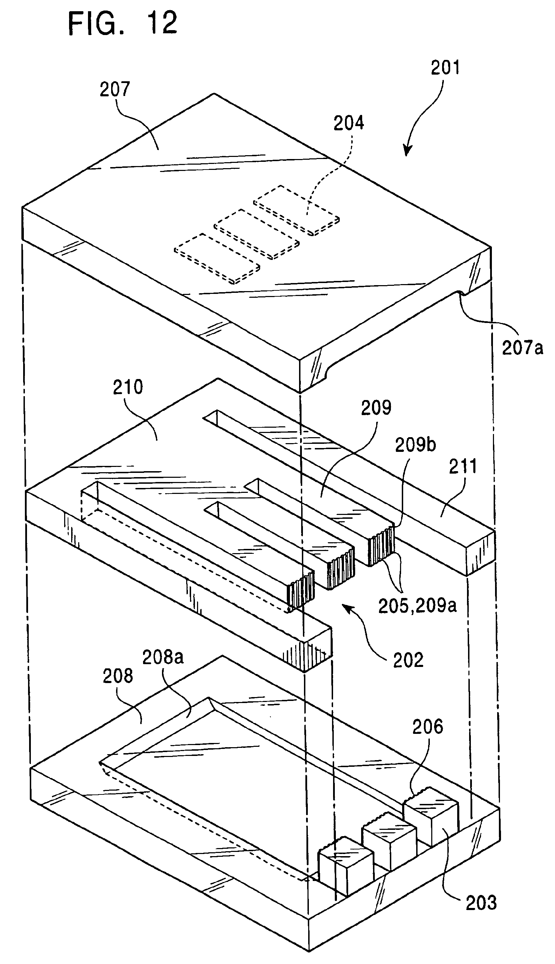

Referring to FIG. 12 through FIG. 17, a fifth embodiment of the present invention is now discussed.

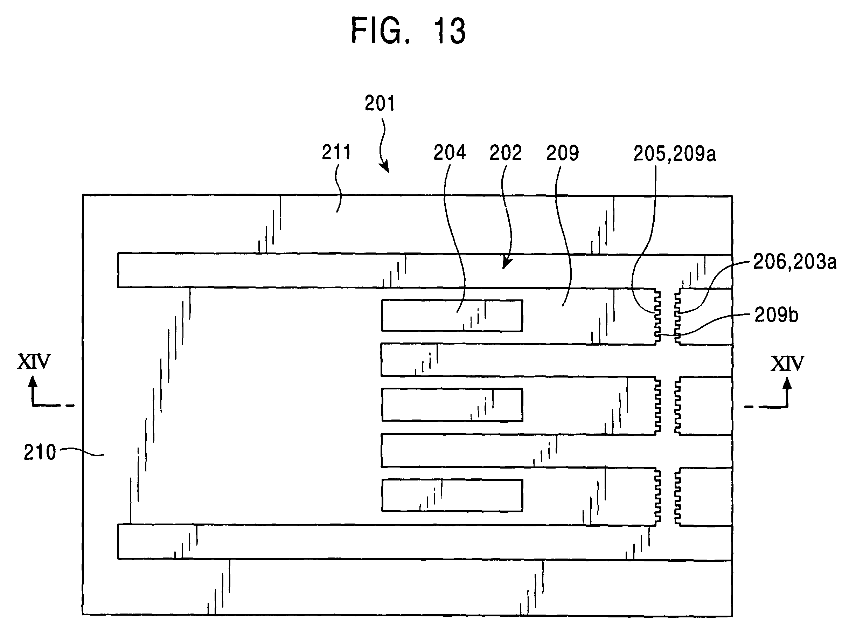

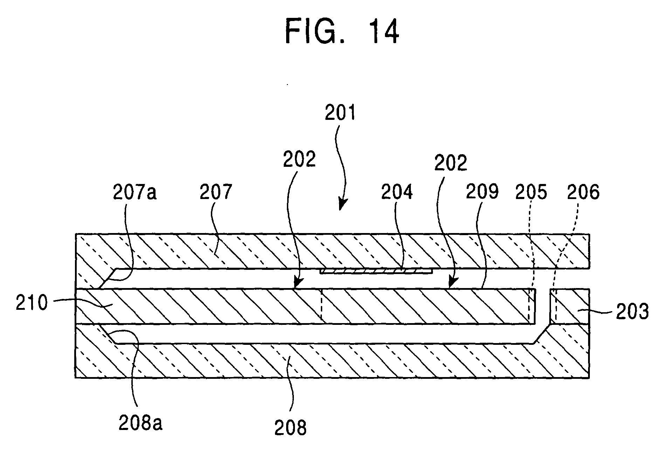

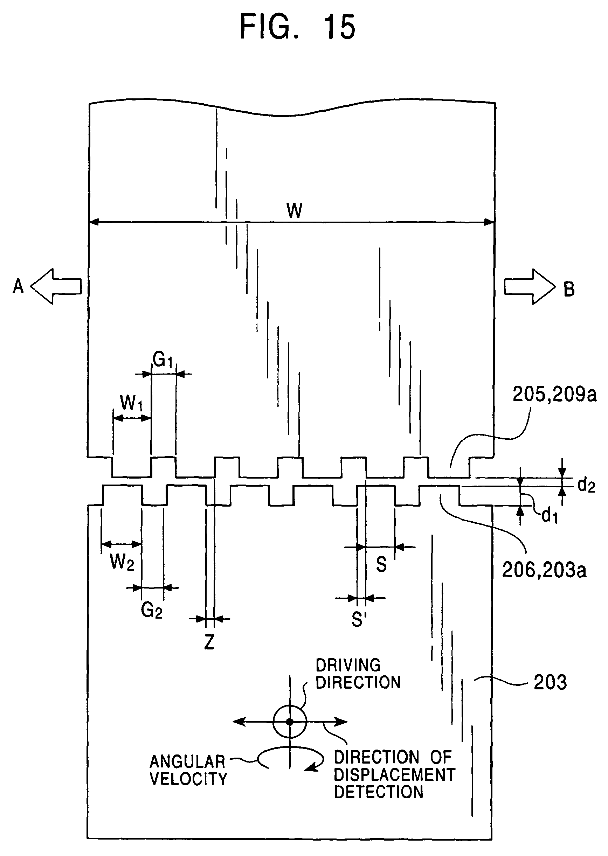

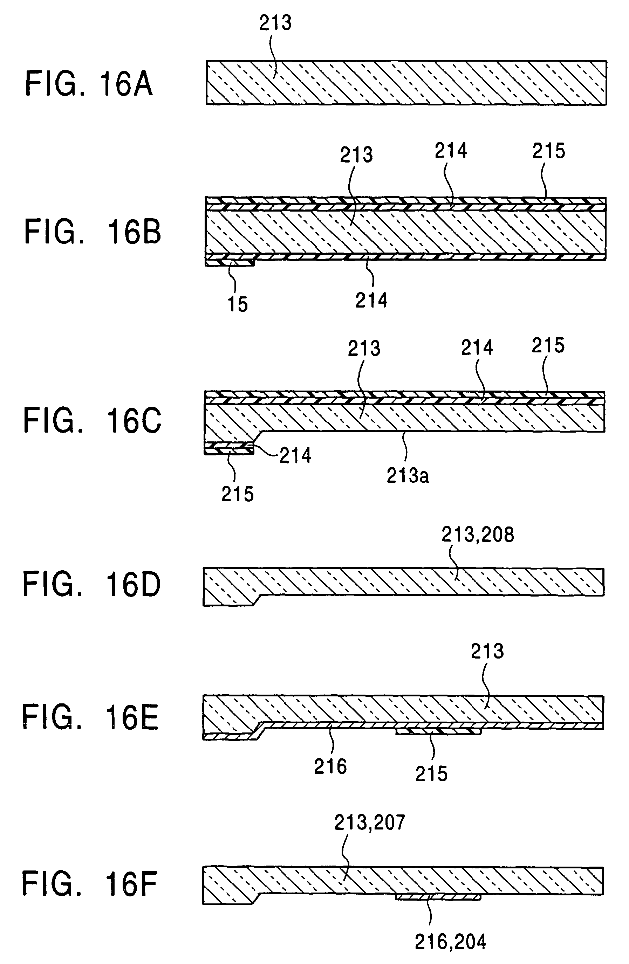

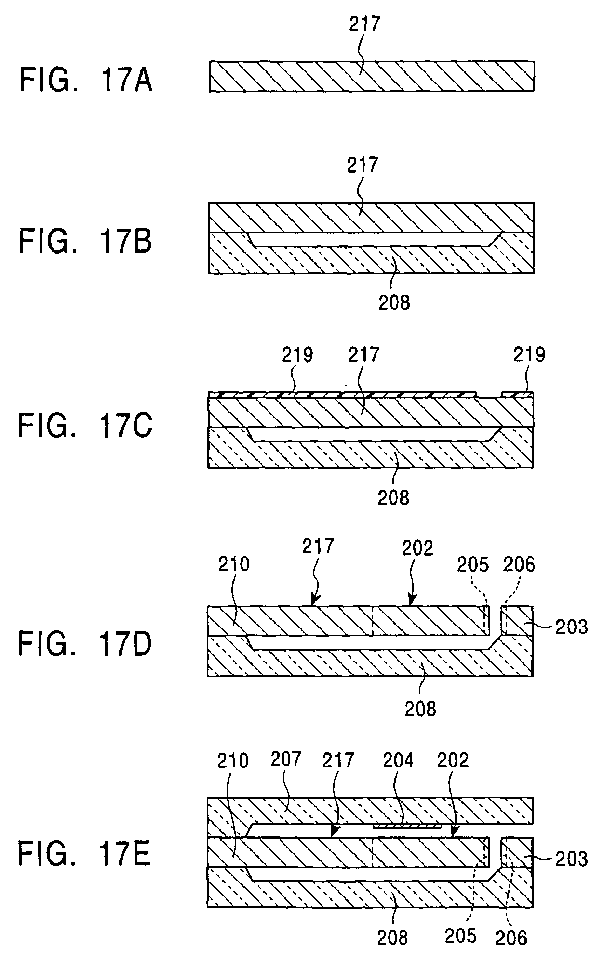

FIG. 12 is an exploded perspective view generally showing a gyroscope 201 of the fifth embodiment of the present invention, FIG. 13 is a plan view of the gyroscope 201 (showing the electrode construction on the underside of an upper glass substrate), FIG. 14 is a sectional view of the gyroscope 201 taken along line XIV-XIV in FIG. 13, FIG. 15 is a sectional view showing the construction of the electrode of one leg in enlargement, FIGS. 16A-16F are sectional views showing a sequence of the manufacturing steps of the gyroscope, in particular, of the manufacturing process of a glass substrate, and FIGS. 17A-17E are sectional views showing a sequence of manufacturing steps of the entire gyroscope. Referring to FIG. 12, there are shown a tuning fork 202, stationary driving electrodes 204, movable detection electrodes 205, detection electrode formation regions 203, stationary detection electrodes 206, an upper glass substrate (base member) 207 and a lower glass substrate (base member) 208.

Referring to FIG. 12 and FIG. 13, the gyroscope 201 of the fifth embodiment includes the three-legged tuning fork 202 having three legs 209 (vibrators), and a support portion 210 connecting the base sides of the legs 209. A frame 211 is arranged surrounding the tuning fork 202, and the tuning fork 202 and the frame 211 are produced from a 200 μm thick, single silicon substrate having electrical conductivity. Referring to FIG. 14, the support portion 210 is interposed and secured between the upper glass substrate 207 and the lower glass substrate 208. The two glass substrates 207 and 208 have respectively recess portions 207a and 208a, each as deep as 10 μm, on their areas facing the tuning fork 202 from above and from below. With a gap of 10 μm allowed between each of the glass substrates 207 and 208 and the tuning fork 202, the leg 209 thus remains floating and vibratory.

Referring to FIG. 12 and FIG. 13, the upper glass substrate 207 has, on the underside thereof facing the legs 209, stationary driving electrodes 204 extending in the longitudinal direction of the leg 209 on the basis of one driving electrode 204 for one leg 209. The stationary driving electrode 204 is fabricated of aluminum film, chromium film, or platinum/titanium film, as thick as 300 nm. A line (not shown) for supplying the stationary driving electrode 204 with a driving signal is formed of the same layer as that for the stationary driving electrode 204, and is thus fabricated of aluminum film, chromium film, or platinum/titanium film. Since the legs 209 are fabricated of silicon having electrical conductivity, the legs 209 need no driving electrodes of their own, and a driver of the legs 209 is formed of capacitive coupling between the legs 209 and each of the stationary driving electrodes 204.

Referring to FIG. 12 and FIG. 13, the leg 209 has, on the end face thereof, grooves 209b extending in the driving direction (in a vertical direction as shown), and the protrusions 209a between the grooves 209b function as movable detection electrodes 205. In this way, six movable detection electrodes 205 extending in the driving direction of the leg 209 are arranged on the end face of each leg 209. The six movable detection electrodes 205 are integrally formed with the leg 209, and this arrangement is electrically equivalent to a circuit that the six movable detection electrodes 205 are connected in parallel. A line (not shown) for picking up a detected signal is formed.

Referring to FIG. 12 through FIG. 14, the lower glass substrate 208 has three detection electrode formation regions 203, each facing the end face of the leg 209. The legs 209 and the detection electrode formation region 203, opposed to each other, have approximately equal facing areas. The tuning fork 202, the frame 211, and the detection electrode formation regions 203 are derived from a single silicon substrate at thick as 200 μm and having electrical conductivity.

As shown in FIG. 14 and FIG. 15, the face of the detection electrode formation region 203, opposed to the end face of the leg 209, is processed to have grooves and protrusions, and the six protrusions 203a formed as stationary detection electrodes 206 are thus provided to face the movable detection electrodes 205 with one detection electrode 206 opposed to one movable detection electrode 205. Like the movable detection electrodes 205, the stationary detection electrodes 206 are fabricated of silicon as an electrically conductive material, and forming a unitary structure. This arrangement is electrically equivalent to a circuit that the six stationary detection electrodes 206 are connected in parallel. A line (not shown) for picking up a detected signal is formed.

Referring to FIG. 15, the movable detection electrodes 205 on the end face of the leg 209 are respectively opposed to the stationary detection electrodes 206 on the opposing face of the detection electrode formation region 203. However, the edges of each of the movable detection electrodes 205 are not accurately aligned with the edges of the corresponding one of the stationary detection electrodes 206 in the displacement detection direction. The edges of each of the movable detection electrodes 205 are laterally deviated from the edges of the corresponding one of the stationary detection electrodes 206 by a distance equal to or greater than the maximum amplitude of the vibration of the leg 209 in the displacement detection direction. The width W1 of each of the movable detection electrodes 205 and the width W2 of each of the stationary detection electrodes 206 are both set to be not shorter than the maximum amplitude of the vibration of the leg 209.

For instance, the gyroscope 201 is dimensioned as follows: the width W of the leg 209 is 200 $\mu$m, the width W1 of each of the movable detection electrodes 205 and the width W2 of each of the stationary detection electrodes 206 are both 20 $\mu$m, the gap G1 between the movable detection electrodes 205 and the gap G2 between the stationary detection electrodes 206 are both 10 $\mu$m, and the deviation Z between the edge of each of the movable detection electrodes 205 and the edge of each of the stationary detection electrodes 206 is 5 $\mu$m. The maximum amplitude of the vibration of the leg 209 in the displacement detection direction is set to be 1 $\mu$m.

Equipotential traces (not shown), fabricated of the same layer of aluminum film, chromium film, or platinum/titanium film, as that for the stationary driving electrode 204, are formed on the inner surface of the upper glass substrate 207 other than the formation area of the stationary driving electrodes 204 and the inner surface of the lower glass substrate 208. Although the equipotential traces are not functionally required by the gyroscope 201, these traces are still required for the convenience of manufacturing process to be discussed later.

The method of manufacturing the gyroscope 201 having the above construction is now discussed. The method of manufacturing the upper glass substrate 207 and the lower glass substrate 208 is first discussed, referring to FIGS. 16A through 16F.

A glass substrate 213 is first prepared as shown in FIG. 16A. After cleaning, the glass substrate 213 is subjected to a sputtering process to form a chromium layer 214 on both sides thereof as shown in FIG. 16B. A resist pattern 215 is formed, and the chromium layer 214 is etched away with the resist pattern 215 used as a mask. Referring to FIG. 16C, the glass substrate 213 is etched using hydrofluoric acid with the resist pattern 215 and the patterned chromium layer 214 used as a mask. The recess 213a as deep as 10 $\mu$m or so is formed on the glass substrate 213 in the area facing the tuning fork 202. As shown in FIG. 16D, the resist pattern 215 and the chromium layer 214 are removed. The manufacturing of the lower glass substrate 208 is now complete.

Referring to FIG. 16E, a metal layer 216, as thick as 300 nm, such as of aluminum film or chromium film is formed on one side of the glass substrate 213 through the sputtering process. A resist pattern 215 is formed thereon, and the metal layer 216 is etched with the resist pattern 215 used as a mask. The stationary driving electrodes 204, and the equipotential traces are formed. The manufacturing of the upper glass substrate 207 is now complete through the above manufacturing steps.

Referring to FIG. 17A, a silicon substrate 217 is prepared. Referring to FIG. 17B, the silicon substrate 217 on the underside thereof is bonded to the lower glass substrate 208 through anodic bonding. In this case, the area becoming the support portion 210, of the silicon substrate 217, is bonded. In the anodic bonding, silicon and glass are easily bonded with the silicon substrate supplied with a positive voltage and the glass substrate supplied with a negative voltage. The area of the silicon substrate 217 becoming the tuning fork is spaced from the surface of the lower glass substrate 208 by only 10 $\mu$m or so. If the silicon substrate 217 is deflected into contact with the lower glass substrate 208 by the electrostatic attractive force during anodic bonding, both substrates are also bonded there. The production of a vibratory tuning fork will thus fail. To prevent the area of the silicon substrate 217, which must be free from contact with the lower glass substrate 208, from being put into contact therewith, the area of the lower glass substrate 208 corresponding to the area of the silicon substrate 217 is equalized in potential to the silicon substrate 217. For this purpose, the equipotential trace is deposited on the surface of the lower glass substrate 208. Similarly, the equipotential trace is deposited on the upper glass substrate 207.

Referring to FIG. 17C, a resist pattern 219 is formed on one side of the silicon substrate 217. The resist pattern 219 in plan view includes the shapes of the tuning fork 202, the support portion 210, the frame 211, the detection electrode formation regions 203, namely, and corresponds to the remaining surface of the original silicon substrate as shown in FIG. 13. Referring to FIG. 15, the protrusions are formed on the end face of the leg 209 of the tuning fork 202 and the opposing face of the detection electrode formation region 203. With the resist pattern 219 used as a mask, the silicon substrate 217 is subjected to etching through anisotropic etching such as ion reactive etching. As shown in FIG. 17D, the tuning fork 202, the support portion 210, the frame 211, and the detection electrode formation regions 203 are thus formed. The tuning fork 202 remains floating in air above the lower glass substrate 208. At the same time, the movable detection electrodes 205 and the stationary detection electrodes 206 are formed. The resist pattern 219 is peeled off.

The upper glass substrate 207 is bonded to the top surface of the silicon substrate 217 on the underside thereof bonded to the lower glass substrate 208, using anodic bonding as shown in FIG. 17E. As shown, the support portion 210 of the tuning fork 202 of the silicon substrate 217 is bonded to the upper glass substrate 207. The manufacturing of the gyroscope 201 of the fifth embodiment is thus complete.

To use the gyroscope 201 of the fifth embodiment, an oscillator as a driving source is connected to the lines for the stationary driving electrode 204, and a capacitance detector is connected between the signal pickup lines for the movable detection electrodes 205, and the signal pickup lines for the stationary detection electrodes 206. When a voltage of several kHz is applied between the tuning fork 202 and the stationary driving electrodes 204 with the oscillator running, each leg 209 of the tuning fork 202 vertically vibrates. When an angular velocity is applied about the axis rotation aligned with the longitudinal direction of the leg 209, the leg 209 vibrates, with an amplitude responsive to the magnitude of the input angular velocity, in a horizontal direction. The movable detection electrodes 205 on each leg 209 of the tuning fork 202 are opposed to the stationary detection electrodes 206 of the detection electrode formation region 203, and the facing areas between the movable detection electrodes 205 and the stationary detection electrodes 206 change, thereby causing a change in capacitance. The capacitance detector detects the change in capacitance, thereby detecting the magnitude of the angular velocity.

In the fifth embodiment, the edges of the movable detection electrodes 205 are laterally deviated from the edges of the stationary detection electrodes 206 as shown in FIG. 15. When the leg 209 is displaced leftwardly (in the direction as represented by an arrow A) with respect to the detection electrode formation regions 203 as shown in FIG. 15, the facing areas between the movable detection electrodes 205 and the stationary detection electrodes 206 increase, thereby increasing the capacitance therebetween. When the leg 209 is displaced leftwardly (in the direction as represented by an arrow B) with respect to the detection electrode formation regions 203, the facing areas between the movable detection electrodes 205 and the stationary detection electrodes 206 decrease, thereby decreasing the capacitance therebetween. The direction of the angular velocity is thus determined by detecting whether the change in capacitance is positive and negative.

The gyroscope 201 of the fifth embodiment eliminates the need for the arrangement of a detection electrode between legs, which would be required in the conventional gyroscopes. As a result, the leg gap is minimized to the manufacturing limit available in the process of silicon substrates, for instance, to several tens of μm. The Q factor is thus increased. If the leg gap is within a range from 300 μm to 400 μm in a gyroscope having a leg width of 200 μm, the Q factor is approximately 1000. If the leg gap is narrowed to several tens of μm, the Q factor is doubled, becoming 2000 or so. With an increase in the Q factor, the detection sensitivity is increased in the gyroscope as an angular velocity sensor, and the required driving voltage is lowered. Furthermore, the device itself is made compact.

In the fifth embodiment, the movable detection electrodes 205 are formed on the end face of the longitudinal extended leg 209, and the stationary detection electrodes 206 are produced at the same manufacturing process as that for the tuning fork 202. Since the stationary detection electrodes 206 are spaced from the stationary driving electrode 204, interference between the electrodes is thus reduced.

The gyroscopes of the present invention are modifications of the gyroscope of the invention which has been filed in the Japanese Patent Office, and have the following advantages over the disclosed gyroscope.

Unlike the gyroscope 201 of the fifth embodiment, the gyroscope 21 shown in FIG. 10 and FIG. 11 includes two stationary detection electrodes 6 for one leg 9 on the underside of the upper glass substrate 7. Since the leg 9, fabricated of electrically conductive silicon, functions as an electrode, the leg 9 itself has neither driving electrode nor detection electrode.

The gyroscope 201 in the fifth embodiment includes a total of 6 movable detection electrodes 205 and six stationary detection electrodes 206 on a per leg basis. The movable detection electrodes 205 are connected in parallel and the stationary detection electrodes 206 are connected in parallel. Now let $C_1$, $C_2$,..., $C_6$ represent capacitances formed of the 6 electrode pairs of the movable detection electrodes 205 and stationary detection electrodes 206.

When no angular velocity is input to the leg 209 with no Coriolis force generated, the displacement is zero (in an initial state). Let $C_{dt1}$ represent a capacitance for one leg, and

$$C_{dt1} = C_1 + C_2 + \ldots + C_6 \qquad \ldots \quad (12)$$

Let $C_{dt2}$ represent the capacitance of the leg when a displacement occurs through the Criolis force with an angular velocity input to the leg 209, and

$$C_{dt2}=(C_1+\Delta C_1) + (C_2+\Delta C_2)+ \ldots + (C_6+\Delta C_6) \quad \ldots \quad (13)$$

where $\Delta C_1$, $\Delta C_2$,..., $\Delta C_6$ are changes in capacitances.

Equation (13) is written as the following equation (14).

$$C_{dt2} = \sum_{i=1}^{6} C_i + \sum_{i=1}^{6} \Delta C_i$$

$$\ldots \quad (14)$$

If n detection electrodes are arranged on a single leg, equation (14) becomes the following equation (15).

$$C_{dt2} = \sum_{i=1}^{n} C_i + \sum_{i=1}^{n} \Delta C_i$$

$$\ldots \quad (15)$$

For example, $C_{dt1}$ is set to be 1 pF, and $\Delta C_i$ ranges from 0.01 to 0.1 pF.

Since the gyroscope 21 shown in FIG. 10 and FIG. 11 has two detection electrodes 6a for one leg 9, n is 2 in equation (15). A change in capacitance per leg falls within a range from 0.02 to 0.2 pF. In the gyroscope 201 of the fifth embodiment, n is 6 in equation (15), and a change in capacitance per leg falls within a range from 0.06 to 0.6 pF. Given the same angular velocity and the same displacement in the leg 209, the gyroscope 201 of the fifth embodiment results in a capacitance change three times as large as that in the gyroscope 21, in other words, the gyroscope 201 of the fifth embodiment provides the sensitivity three times as good as that of the gyroscope 21. If n detection electrodes are arranged for one leg 9, a resulting sensitivity is n/2 times better than the sensitivity of the gyroscope 21. The gyroscope 201 of the fifth embodiment thus offers a better detection sensitivity.

The height of the protrusions 209a forming the movable detection electrodes 205 and the stationary detection electrodes 206 of the fifth embodiment is now discussed.

Referring to FIG. 15, now let S represent the facing areas between the movable detection electrode 205 and the stationary detection electrode 206, S' represent the areas of the movable detection electrode 205 and the stationary detection electrode 206 not opposed to each other in the initial state, $d_1$ represent the gap between the end face of the leg 209 and the opposing face of the detection electrode formation region 203, and $d_2$ represent the height of the protrusions 209a and 203a forming the detection electrodes.

Capacitance $C_0$ per electrode in the initial state with no displacement taking place in the leg 209 is expressed by the following equation (16).

$$C_0=\varepsilon_0\varepsilon \ (S/d_1) + \varepsilon_0\varepsilon \ (S'/(d_1+d_2)) \ \ldots \quad (16)$$

Capacitance $C_1$ with the leg 209 displaced for an area increase of S' is

$$C_1=\varepsilon_0\varepsilon \ (S/d_1) + \varepsilon_0\varepsilon \ (S'/d_1) \quad \ldots \quad (17)$$

wherein $\varepsilon_0\varepsilon$ is a dielectric constant in space between the electrodes.

From equations (16) and (17), a change in capacitance $\Delta C$ per electrode is

$$\Delta C = C_1 - C_0$$

$$= \varepsilon_0 \varepsilon \ (S'/d_1) - \varepsilon_0 \varepsilon \ (S'/(d_1+d_2))$$

$$= \varepsilon_0 \varepsilon \ S'[1/d_1) - \{(1/(d_1+d_2))\}] \qquad \ldots \quad (18)$$

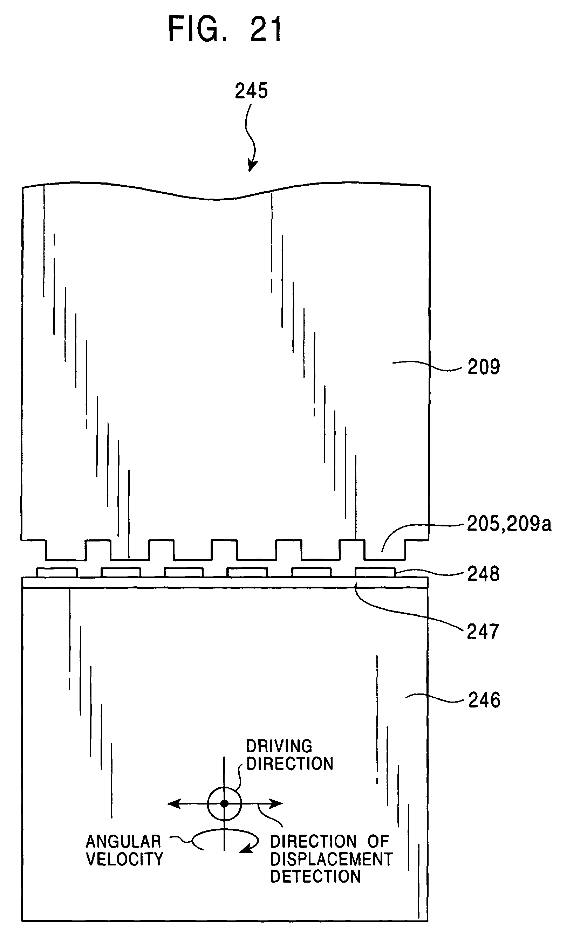

From equation (18), the condition under which the gyroscope of this invention presents a higher capacitance change with n electrodes incorporated than the gyroscope 21 shown in FIG. 10 and FIG. 21 is determined as expressed by the following equation (19).

$$n[(1/d_1) - \{1/(d_1+d_2)\}] > 2 \times (1/d_1) \ldots \quad (19)$$

Since n=6 in this embodiment,

$$6[(1/d_1) - \{1/(d_1+d_2)\}] > 2 \times (1/d_1)$$

$$d_2 > 1/2 \times d_1 \qquad \qquad \ldots \quad (20)$$

Preferably, the height $d_2$ of the protrusion of the movable detection electrode is greater than half $d_1$, i.e., greater than the gap between the movable detection electrode 205 and the stationary detection electrode 206. (FIG. 15 exaggerates the height of the protrusion).

In the gyroscope 201 of the fifth embodiment, the tuning fork 202 is clamped between the two glass substrates 207 and 208, and the tuning fork 202 is easy to handle because it is protected by the two glass substrates 207 and 208. With its construction less susceptible to dust entry, the tuning fork 202 is free from external disturbance, and detection accuracy is thus assured. The construction described above permits vacuum packaging, and the Q factor is even more improved with the vacuum packaging.

Sixth embodiment

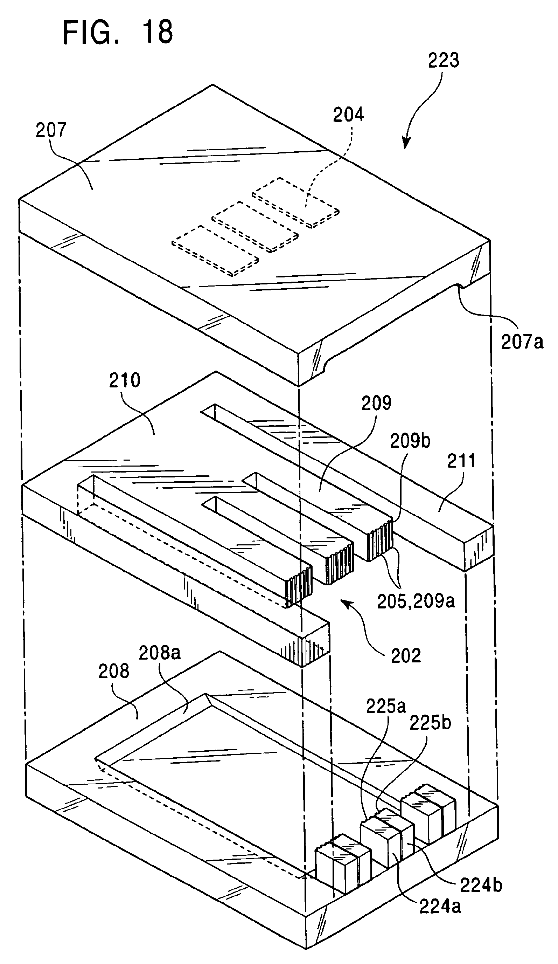

A sixth embodiment of the present invention is now discussed, referring to FIG. 18 through FIG. 20.

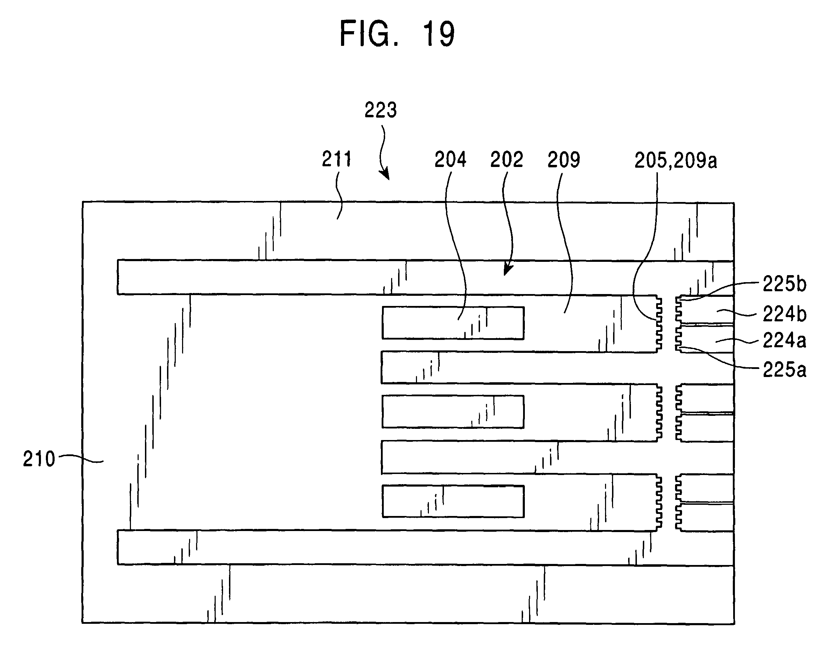

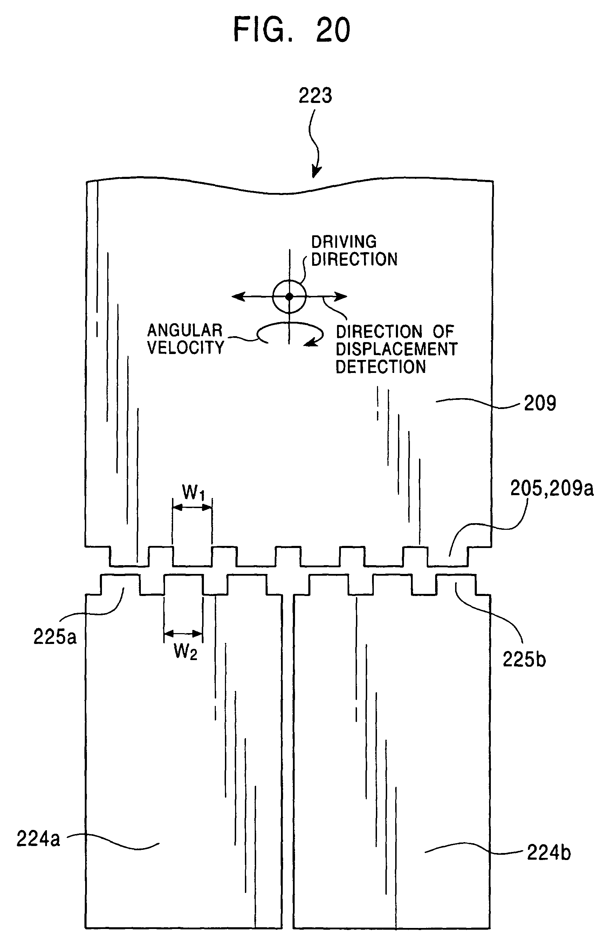

FIG. 18 is an exploded perspective view generally showing a gyroscope 223 of the sixth embodiment, FIG. 19 is a plan view of the gyroscope 223 (showing the electrodes on the underside of an upper glass substrate), and FIG. 20 is an enlarged plan view showing the construction of the electrodes of one leg of the gyroscope 223.

The basic construction of the gyroscope 223 of the sixth embodiment remains unchanged from that of the fifth embodiment. The difference therebetween lies in the construction of the electrode on one leg. In FIG. 18 through FIG. 20, components identical to those described with reference to FIG. 12, FIG. 13, and FIG. 15 are designated with the same reference numerals and the discussion thereon is not repeated.

In the fifth embodiment, one leg 209 is opposed to one detection electrode formation region 203, and the six movable detection electrodes 205 and the six stationary detection electrodes 206 are respectively arranged on the end face of the leg 209 and the opposing face of the detection electrode formation region 203. In the gyroscope 223 of the sixth embodiment, two detection electrode formation regions 224a and 224b are opposed to on leg 209 as shown in FIG. 18 and FIG. 19. Six movable detection electrodes 205 are arranged on the end face of the leg 209, and three stationary detection electrodes 225a and three stationary detection electrodes 225b are respectively arranged on the opposing faces of the detection electrode formation regions 224a and 224b, facing the end face of the leg 209.

Referring to FIG. 20, the end face of the leg 209 is processed to have protrusions and grooves, and the movable detection electrodes 205, i.e., the six protrusions 209a extend in the driving direction of the leg 209. The opposing faces of the detection electrode formation regions 224a and 224b, which are affixed to the lower glass substrate 208, are processed to have protrusions and grooves. The detection electrode formation regions 224a and 224b respectively have, on their opposing faces, the three stationary detection electrodes 225a and the three stationary detection electrodes 225b so that one stationary electrode is opposed to one movable detection electrode 205. In other words, the detection electrode formation regions 224a and 224b in the sixth embodiment are formed by cutting the detection electrode formation region 203 in the fifth embodiment at its center into two. The three stationary detection electrodes 225a on the detection electrode formation region 224a are connected in parallel and the three stationary detection electrodes 225b on the detection electrode formation region 224b are connected in parallel. Lines (not shown) for picking up detected signals are respectively extended from the electrodes of the detection electrode formation regions 224a and 224b.

Referring to FIG. 20, the movable detection electrodes 205 on the leg 209 are opposed to the stationary detection electrodes 225a and 225b on the detection electrode formation regions 224a and 224b. The edges of the movable detection electrodes 205 (the right edge and the left of each electrode 205 in FIG. 20) are not aligned with the edges of the respective stationary detection electrodes 225a and 225b in the displacement detection direction of the leg 209. Referring to FIG. 20, the left edges of the stationary detection electrodes 225a of the left detection electrode formation region 224a are respectively leftwardly deviated from the left edges of the corresponding movable detection electrodes 205 by a distance equal to or greater than the maximum amplitude of the vibration of the leg 209, and the right edges of the stationary detection electrode 225b of the right detection electrode formation region 224b are respectively rightwardly deviated from the right edges of the corresponding movable detection electrodes 205 by a distance equal to or greater than the maximum amplitude of the vibration of the leg 209. The width W1 of each of the movable detection electrodes 205 and the width W2 of each of the stationary detection electrodes 225a and 225b are both set to be not shorter the maximum amplitude of the vibration of the leg 209.

To use the gyroscope 223 of the sixth embodiment, an oscillator as a driving source is connected between the tuning fork 202 and the lines for the stationary driving electrode 204, a first capacitance detector is connected between the line for the movable detection electrodes 205 and the line for the stationary detection electrodes 225a on the detection electrode formation region 224a, and a second capacitance detector is connected between the line for the movable detection electrodes 205 and the line for the stationary detection electrodes 225b on the detection electrode formation region 224b. When a voltage of several kHz is applied between the tuning fork 202 and the stationary driving electrodes 204 with the oscillator running, each leg 209 of the tuning fork 202 vertically vibrates. When an angular velocity is applied about the axis rotation aligned with the longitudinal direction of the leg 209, the leg 209 vibrates, with an amplitude responsive to the magnitude of the input angular velocity, in a horizontal direction. The movable detection electrodes 205 of each leg 209 of the tuning fork 202 are opposed to the stationary detection electrodes 225a and 225b of the detection electrode formation regions 224a and 224b. In response to the horizontal vibration of the leg 209, the facing areas between the movable detection electrodes 205 and the stationary detection electrodes 225a and 225b change, causing a change in capacitance therebetween. The first capacitance detector and second capacitance detector differentially detect change in capacitance, thereby detecting the magnitude of the angular velocity.

The gyroscope 223 of the sixth embodiment eliminates the need for the arrangement of a detection electrode between legs, which would be required in the conventional gyroscopes. As a result, the leg gap is minimized, and the Q factor is thus increased. With an increase in the Q factor, the detection sensitivity is increased in the gyroscope as an angular velocity sensor, and the required driving voltage is lowered. Furthermore, the device itself is made compact. The sixth embodiment thus provides the same advantages as those of the fifth embodiment. Like the fifth embodiment, the sixth embodiment increases the detection sensitivity.

Since the sixth embodiment adopts the differential detection method, initial capacitance values cancel each other through the differential operation because the sums of the initial capacitances of the two groups are equal to each other. A change in capacitance remains through the differential operation. Since noise components contained in the initial capacitance values are canceled, the detection accuracy is improved.

Seventh embodiment

A seventh embodiment of the present invention is now discussed, referring to FIG. 21.

FIG. 21 is an enlarged plan view showing the construction of the electrode of one leg of a gyroscope 245 in accordance with the seventh embodiment of the present invention. The gyroscope 245 of the seventh embodiment remains unchanged in basic construction from the gyroscope 201 of the fifth embodiment. The difference therebetween is that the gyroscope 245 of the seventh embodiment is not processed for protrusions for stationary detection electrode. In FIG. 21, components identical to those described with reference to FIG. 15 are designated with the same reference numerals, and the discussion thereon is not repeated.

In the fifth embodiment shown in FIG. 15, the end face of the leg 209, facing the detection electrode formation region 203, is processed to form the protrusions 209a for the movable detection electrodes 205. In contrast, in the gyroscope 245 of the seventh embodiment, an insulating layer 247, such as a silicon oxide film, is formed on the opposing face of a detection electrode formation region 246, facing the end face of the leg 209. Stationary detection electrodes 248, fabricated of aluminum, chromium, or platinum/titanium film, is then formed on the insulating layer 247.

The gyroscope 245 of the seventh embodiment presents the same advantages as those of the fifth embodiment, namely, features increased detection sensitivity, low driving voltage, and compact design.

Eighth embodiment

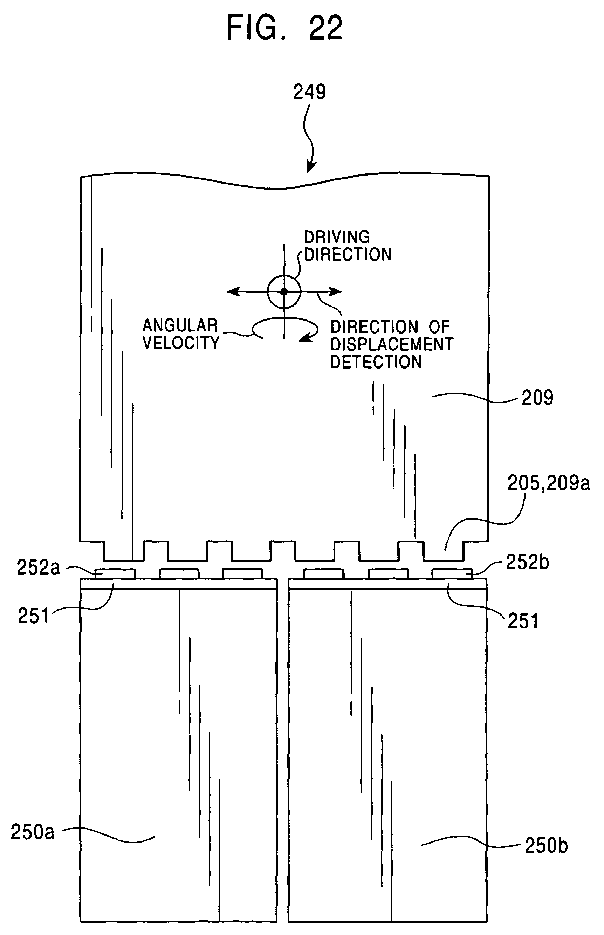

An eighth embodiment of the present invention is now discussed, referring to FIG. 22.

FIG. 22 is an enlarged plan view showing the construction of the electrode of one leg of a gyroscope 249 in accordance with the eighth embodiment of the present invention. The gyroscope 249 of the eighth embodiment remains unchanged in basic construction from the gyroscope 223 of the sixth embodiment. The difference therebetween is that the gyroscope 249 of the eighth embodiment is not processed for protrusions for stationary detection electrode. In FIG. 22, components identical to those described with reference to FIG. 20 are designated with the same reference numerals, and the discussion thereon is not repeated.

In the sixth embodiment shown in FIG. 20, the opposing faces of the detection electrode formation regions 224a and 224b, facing the end face of the leg 209, are processed to form the protrusions for the stationary detection electrodes 225a and 225b. In the gyroscope 249 of the eighth embodiment, insulating layers 251, such as silicon oxide layers, are formed on the opposing faces for detection electrodes 250a and 250b, facing the end face of the leg 209. Stationary detection electrodes 252a and 252b, fabricated of aluminum film, chromium film, or platinum/titanium film, are formed on the insulating layers 251.

The gyroscope 249 of the eighth embodiment presents the same advantages as those of the sixth embodiment, namely, features increased detection sensitivity through differential detection, low driving voltage, and compact design.

Ninth embodiment

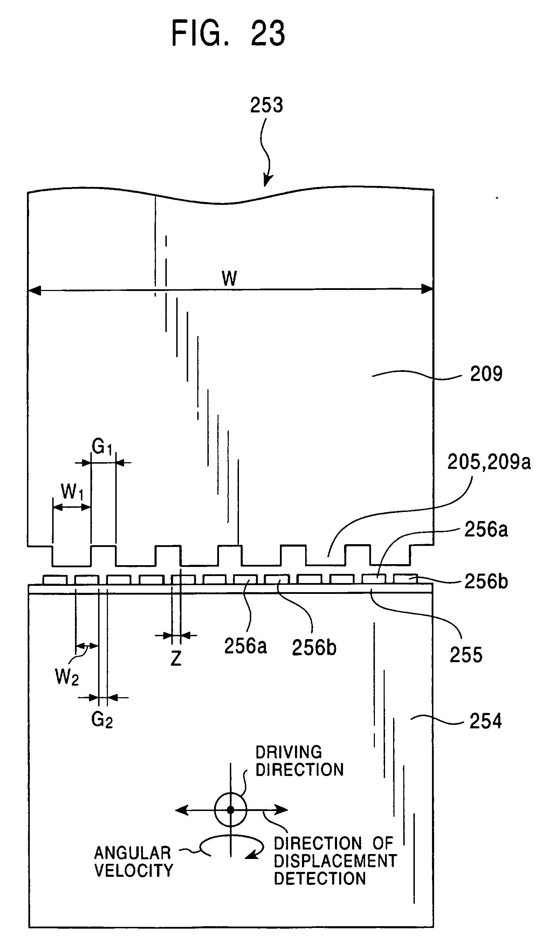

A ninth embodiment of the present invention is discussed, referring to FIG. 23.

FIG. 23 is an enlarged plan view showing the construction of the electrode of one leg of a gyroscope 253 in accordance with the ninth embodiment of the present invention. The gyroscope 253 of the ninth embodiment remains unchanged in basic construction from the gyroscope 245 of the seventh embodiment. The difference therebetween lies in the layout of stationary detection electrodes. In FIG. 23, components identical to those described with reference to FIG. 21 are designated with the same reference numerals, and the discussion thereabout is not repeated.

In the seventh embodiment shown in FIG. 21, one stationary detection electrode 248 of the detection electrode formation region 246 is opposed to one movable detection electrode 205 on the end face of the leg 209. In the gyroscope 253 of the ninth embodiment, two stationary detection electrodes 256a and 256b on a detection electrode formation region 254 are opposed to one movable detection electrode 205 on the end face of the leg 209 as shown in FIG. 23.

Each leg 209 has, on the end face thereof, the movable detection electrodes 205, namely, the six protrusions 209a extending in the driving direction of the leg 209. The detection electrode formation region 254 has, on the opposing face thereof facing the leg 209, a total of 12 stationary detection electrodes 256a and 256b (six pairs) on an insulating layer 255 with one pair facing one movable detection electrode 205. The twelve stationary detection electrodes 256a and 256b per leg 209 are divided into two groups 256a and 256b, which alternate with each other. The six stationary detection electrodes 256a are then connected in parallel, while the six stationary detection electrodes 256b in the other group are connected in parallel. Lines (not shown) for picking up detected signals are extended from the two electrode groups. In the ninth embodiment, the stationary detection electrodes 256a and 256b are divided into the two groups, and each of the number of the electrodes 256a (six) in the one group and the number of the electrode stationary detection electrodes 256b (six) is equal to the number of the movable detection electrodes 205 (six). The stationary detection electrodes 256a in the one group are connected in parallel and the stationary detection electrodes 256b in the other group are connected in parallel.

Referring to FIG. 23, one movable detection electrode 205 on the leg 209 are opposed to one pair of stationary detection electrodes 256a and 256b on the detection electrode formation region 254. Both edges of one movable detection electrode 205 (the left edge and right edge of the one movable detection electrode 205 in FIG. 23) are not aligned with the outer edges of the corresponding pair of the stationary detection electrodes 256a and 256b in the direction of the displacement detection. The outer edges of the pair of the stationary detection electrodes 256a and 256b overextend beyond the outer edges of the corresponding movable detection electrode 205 by a distance not shorter than the maximum amplitude of the vibration of the leg 209. The width W1 of each of the movable detection electrodes 205 and the width W2 of each of the stationary detection electrodes 256a and 256b are both set to be not shorter than the maximum amplitude of the vibration of the leg 209.

For instance, the gyroscope of the ninth embodiment is dimensioned as follows: the width W of the leg 209 is 200 $\mu$m, the width W1 of each of the movable detection electrodes 205 is 35 $\mu$m, the gap G1 between the movable detection electrodes 205 is 15 $\mu$m, the width W2 of each of the stationary detection electrodes 256a and 256b is 20 $\mu$m, the gap G2 between the pair of the stationary detection electrodes 256a and 256b is 5 $\mu$m, and the overextension in width Z of each of the outer edges of the pair of the stationary detection electrodes 256a and 256b beyond the outer edges of the corresponding movable detection electrode 205 is 5 $\mu$m. The maximum amplitude of the vibration of the leg 209 in the displacement detection direction is set to be 1 $\mu$m. In the ninth embodiment, the overextension in width of the outer edge of the one stationary detection electrodes 256a of the pair beyond the one edge of the movable detection electrode 205 is set to be equal to the overextension in width of the outer edge of the other stationary detection electrode 256b of the pair beyond the other edge of the movable detection electrode 205. It suffices to set these overextensions in width to be equal to or greater than the maximum amplitude of the vibration of the leg 209. Equalizing the two overextensions in width is not a requirement.

To use the gyroscope 253 of the ninth embodiment, an oscillator as a driving source is connected between the tuning fork 202 and the lines for the stationary driving electrode 204, a first capacitance detector is connected between the line for the movable detection electrodes 205 and the line for the stationary detection electrodes 256a in the one group, and a second capacitance detector is connected between the line for the movable detection electrodes 205 and the line for the stationary detection electrodes 256b in the other group. When a voltage of several kHz is applied between the tuning fork 202 and the stationary driving electrodes 204 with the oscillator running, each leg 209 of the tuning fork 202 vertically vibrates. When an angular velocity is applied about the axis rotation aligned with the longitudinal direction of the leg 209, the leg 209 vibrates, with an amplitude responsive to the magnitude of the input angular velocity, in a horizontal direction. One detection electrode 205 of each leg 209 of the tuning fork 202 is opposed to one pair of the stationary detection electrodes 256a and 256b, and in response to the horizontal vibration of the leg 209, the facing areas between the movable detection electrodes 205 and the stationary detection electrodes 256a and 256b change, causing a change in capacitance therebetween. The first capacitance detector and second capacitance detector differentially detect change in capacitance, thereby detecting the magnitude of the angular velocity.

The gyroscope 253 of the ninth embodiment eliminates the need for the arrangement of a detection electrode between legs, which would be required in the conventional gyroscopes. As a result, the leg gap is minimized, and the Q factor is thus increased. With an increase in the Q factor, the detection sensitivity is increased in the gyroscope as an angular velocity sensor, and the required driving voltage is lowered. Furthermore, the device itself is made compact. The ninth embodiment thus provides the same advantages as those of the preceding embodiments. Like the preceding embodiments, the ninth embodiment provides a good detection sensitivity, compared with the conventional gyroscope.

Since the ninth embodiment adopts the differential detection method, initial capacitance values cancel each other through the differential operation because the sums of the initial capacitances of the two groups are equal to each other, and a change in capacitance remains through the differential operation. Since noise components contained in the initial capacitance values are canceled, the detection accuracy is improved. In the ninth embodiment, the stationary detection electrodes 256a and 256b are divided into the two electrode groups, and the number of electrodes (six) in each group is equal to the number of the movable detection electrodes 205 (six). The stationary detection electrodes 256a and 256b are paired and opposed to the corresponding movable detection electrode 205. The width of the leg 209 is most effectively used.

The scope of the present invention is defined by the claims. Various changes and modifications are possible without departing from the scope of the present invention For instance, the number electrodes in each of the above embodiments be optionally set. As long as the gyroscope can be processed, the more the number of electrodes, the better, from the sensitivity standpoint. The preceding embodiments employ a three-legged tuning fork, but the present invention is not limited to the three-legged type. Alternatively, a one-legged tuning fork may be used.

Instead of clamping the tuning fork fabricated of silicon between the two glass substrates, the upper glass substrate may be dispensed. This arrangement leads to a gyroscope having a simpler construction. Silicon and glass are compatible with each other in an anodic bonding, and the glass substrate may be replaced with a substrate of a different material having a fused glass coating. As the material of the tuning fork, carbon may be substituted for silicon. The materials and dimensions of the components used in the preceding embodiments are not limited to those described, and may be modified as appropriate.

Tenth embodiment

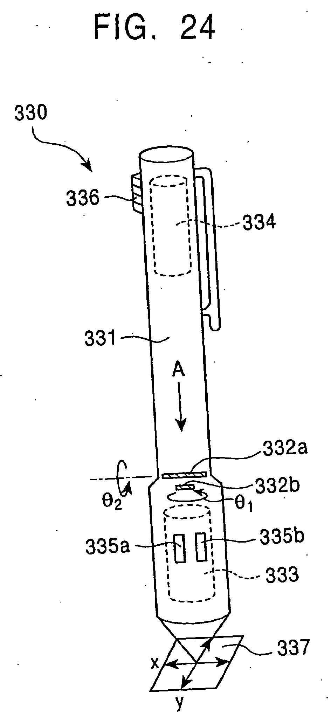

A tenth embodiment of the present invention is discussed, referring to FIG. 24 through FIG. 26.

The tenth embodiment is an input device that incorporates the gyroscope in accordance with one of the first through ninth embodiment, and specifically, is a pen-type pointing device working as a coordinates-input device for a personal computer.

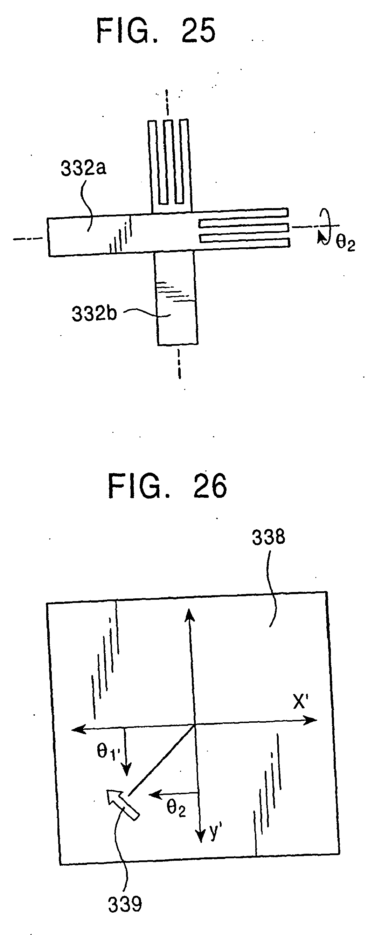

Referring to FIG. 24, a pen-type pointing device 330 of the tenth embodiment includes, in a pen case 331, two gyroscopes 332a and 332b of the type discussed in connection with one of the first through tenth embodiments. Referring to FIG. 25, the two gyroscopes 332a and 332b are arranged so that the legs thereof are mutually perpendicular to each other if the pen-type input device 330 is viewed from above (in the direction indicated by an arrow A in FIG. 24). A driver and detector circuit 333 is also included to drive the gyroscopes 332a and 332b and to detect an angle of rotation of the pen-type input device 330. The case 331 houses a battery 334, two switches 335a and 335b, as opposed to mouse switches in a mouse, and a switch 336 of the pen-type input device 330.

When a user holds and moves the pen-type input device 330 in a desired direction, a cursor etc. is moved in the desired direction on the screen of the personal computer. Specifically, when the user moves the pen tip in the x direction on a page 337 as shown in FIG. 24, the gyroscope 332b detects an angle of rotation θ1. When the user moves the pen tip in the y direction on the page 337, the gyroscope 332a detects an angle of rotation θ2. When the input device is moved in other directions, a combination of the angles of rotation θ1 and θ2 is detected. The personal computer receives signals responsive to the angle of rotation θ1 and the angle of rotation θ2 from the pen-type input device 330. Referring to FIG. 26, the personal computer moves the cursor 339 from the original point of the cursor 339 on the computer screen prior to the movement by a distance responsive to the angles of rotation θ1 and θ2 with respect to the x and y axis. In this way, the tenth embodiment provides the pen-type input device 330 that works in the same way as a typical mouse that employs an optical encoder.

Because of compact design, low driving voltage, and high sensitivity thereof, the gyroscopes 332a and 332b of this invention are appropriate for use in a compact coordinates input device such as the pen-type input device 330 of the tenth embodiment. The gyroscopes of the present invention also finds applications in general input devices, including a navigation system or a head-mount display, which detects an angular velocity.

As discussed above, the gyroscopes of the present invention eliminate the need for a detection electrode, arranged between legs, which would be required in the conventional art. The Q factor is thus increased, the detection sensitivity is heightened, and the driving voltage is reduced. The device itself is miniaturized. With the gyroscope incorporated, a compact coordinates input device for a personal computer is provided.

## Claims

1. A gyroscope comprising:

   a vibrator (2), fabricated of an electrically conductive material, with the base end thereof serving as a support portion (10);
   a base member for supporting the support portion (10) of the vibrator; and
   a driver for driving the vibrator;

   **characterised by** a plurality of movable detection electrodes (5a, 5b) connected in parallel, each movable detection electrode (5a, 5b) formed of one of a plurality of protrusions (9a) of the vibrator (2), wherein the plurality of the protrusions (9a) are formed by processing at least part of the surface of the end portion of the vibrator, and each protrusion (9a) has a width not shorter than the maximum amplitude of the vibration of the vibrator in the direction of the displacement detection; and a plurality of stationary detection electrodes (6a, 6b) connected in parallel for detecting the displacement of the vibrator, wherein the stationary detection electrodes (6a, 6b) are arranged on the base member to be opposed to the plurality of the movable detection electrodes (5a, 5b) so that a capacitance develops with the plurality of the movable detection electrodes opposed thereto, and each of the stationary detection electrodes (6a, 6b) has a width not shorter than the maximum amplitude of the vibration of the vibrator in the direction of the displacement detection and wherein the facing areas between the movable detection electrodes (5a, 5b) and the stationary detection electrodes (6a, 6b) change in response to vibration in the direction of the displacement detection.

2. A gyroscope as claimed in Claim 1, **characterized in that** the protrusions (9a) are formed on the surface of the end portion of the vibrator perpendicular to the driving direction of the vibrator and parallel to the direction of displacement detection of the vibrator.

3. A gyroscope as claimed in Claim 1, **characterized in that** the protrusions (9a) are formed so as to extend in the direction of the extension of the vibrator.

4. A gyroscope as claimed in Claim 2 or 3, **characterized in that** the plurality of stationary detection electrodes (6a, 6b) are formed into two groups, each group comprising a plurality of stationary detection electrodes, wherein the plurality of the stationary detection electrodes of the two groups are arranged on the base member to be opposed to the plurality of the movable detection electrodes so that a capacitance develops with the plurality of the movable detection electrodes opposed thereto, the outer edge of each of the plurality of the stationary detection electrodes in the one group outwardly overextends by at least a width equal to the maximum amplitude of the vibration of the vibrator in the direction of the displacement detection beyond the outer edge of each of the plurality of the movable detection electrodes opposed thereto, the outer edge of each of the plurality of the stationary detection electrodes in the other group outwardly overextends by at least a width equal to the maximum amplitude of the vibration of the vibrator in the direction of the displacement detection beyond the outer edge of each of the plurality of the movable detection electrodes opposed thereto, and each of the stationary detection electrodes has a width not shorter than the maximum amplitude of the vibration of the vibrator in the direction of the displacement detection, and wherein a determination is made of a difference between the sum of capacitance developed between the plurality of the stationary detection electrodes in the one group and the plurality of the movable detection electrodes respectively opposed thereto and the sum of capacitance developed between the plurality of the stationary detection electrodes in the other group and the plurality of the movable detection electrodes respectively opposed thereto.

5. A gyroscope according to claim 1 or 4, wherein the vibrator is configured in the surface thereof so that the top surface of the support portion extends to and is flush with the top surface of the plurality of the protrusions forming the plurality of the movable detection electrodes, with an area between the adjacent movable detection electrodes recessed.

6. A gyroscope according to claim 1 or 4, wherein the vibrator is configured in the surface thereof so that an area between the adjacent movable detection electrodes and at least an area between the formation area of the movable detection electrodes and the support portion are recessed, with the protrusions forming the movable detection electrodes remaining unrecessed.

7. A gyroscope according to claim 6, wherein the top surface of the support portion remains unrecessed to be flush with the top surface of the protrusions forming the movable detection electrodes.

8. An input device comprising a gyroscope according to any preceding claim.

9. A gyroscope according to Claim 4, wherein the number of the plurality of the stationary detection electrodes of each of the two groups is equal to the number of the movable detection electrodes.

10. A gyroscope according to any of Claims 2, 4 and 9, wherein the stationary detection electrodes are formed of a plurality of protrusions, opposed to the plurality of the movable detection electrodes.

11. An input device comprising a gyroscope according Claim 9.

12. An input device according to Claim 11, wherein the stationary detection electrodes are formed of a plurality of protrusions, opposed to the plurality of the movable detection electrodes.


**Patentansprüche**

1. Kreiselgerät, aufweisend:

einen Schwingkörper (2), der aus einem elektrisch leitfähigen Material hergestellt ist und dessen Basisende als Halterungsbereich (10) dient;
ein Basiselement zum Abstützen des Halterungsbereichs (10) des Schwingkörpers; und
einen Treiber zum antriebsmäßigen Bewegen des Schwingkörpers;

**gekennzeichnet durch**
eine Mehrzahl beweglicher Detektionselektroden (5a, 5b), die parallel verbunden sind, wobei jede bewegliche Detektionselektrode (5a, 5b) aus einer von mehreren Erhebungen (9a) des Schwingkörpers (2) gebildet ist, wobei die mehreren Erhebungen (9a) **durch** Bearbeiten zumindest eines Teils der Oberfläche des Endbereichs des Schwingkörpers gebildet sind und jede Erhebung (9a) eine Breite aufweist, die nicht kürzer ist als die maximale Schwingungsamplitude des Schwingkörpers in der Verschiebungsdetektionsrichtung; und
eine Mehrzahl stationärer Detektionselektroden (6a, 6b), die parallel verbunden sind, zum Detektieren der Verschiebung des Schwingkörpers, wobei die stationären Detektionselektroden (6a, 6b) auf dem Basiselement gegenüber der Mehrzahl der beweglichen Detektionselektroden (5a, 5b) angeordnet sind, so dass sich eine Kapazität in Bezug auf die Mehrzahl der diesen gegenüberliegenden, beweglichen Detektionselektroden entwickelt und wobei jede der stationären Detektionselektroden (6a, 6b) eine Breite aufweist, die nicht kürzer ist als die maximale Schwingungsamplitude des Schwingkörpers in der Verschiebungsdetektionsrichtung und wobei die einander zugewandt gegenüberliegenden Flächen zwischen den beweglichen Detektionselektroden (5a, 5b) und den stationären Detektionselektroden (6a, 6b) sich in Abhängigkeit von Schwingung in der Verschiebungsdetektionsrichtung verändern.

**2.** Kreiselgerät nach Anspruch 1,
**dadurch gekennzeichnet, dass** die Erhebungen (9a) auf der Oberfläche des Endbereichs des Schwingkörpers rechtwinklig zu der Antriebsbewegungsrichtung des Schwingkörpers und parallel zu der Verschiebungsdetektionsrichtung des Schwingkörpers ausgebildet sind.

**3.** Kreiselgerät nach Anspruch 1,
**dadurch gekennzeichnet, dass** die Erhebungen (9a) derart ausgebildet sind, dass sie in Erstreckungsrichtung des Schwingkörpers verlaufen.

**4.** Kreiselgerät nach Anspruch 2 oder 3,
**dadurch gekennzeichnet, dass** die Mehrzahl der stationären Detektionselektroden (6a, 6b) in zwei Gruppen ausgebildet ist, wobei jede Gruppe eine Mehrzahl stationärer Detektionselektroden aufweist, wobei die Mehrzahl der stationären Detektionselektroden der beiden Gruppen auf dem Basiselement gegenüber der Mehrzahl der beweglichen Detektionselektroden angeordnet ist, so dass sich eine Kapazität in Bezug auf die Mehrzahl der diesen gegenüberliegenden, beweglichen Detektionselektroden entwickelt, wobei der äußere Rand jeder der Mehrzahl der stationären Detektionselektroden in der einen Gruppe sich zumindest über eine Breite, die gleich der maximalen Schwingungsamplitude des Schwingkörpers in der Verschiebungsdetektionsrichtung ist, über den äußeren Rand einer jeden der Mehrzahl der diesen gegenüberliegenden beweglichen Detektionselektroden nach außen hinaus erstreckt, und wobei der äußere Rand jeder der stationären Detektionselektroden in der anderen Gruppe sich zumindest über eine Breite, die gleich der maximalen Schwingungsamplitude des Schwingkörpers in der Verschiebungsdetektionsrichtung ist, über den äußeren Rand jeder der Mehrzahl der diesen gegenüberliegenden beweglichen Detektionselektroden nach außen hinaus erstreckt, und wobei jede der stationären Detektionselektroden eine Breite hat, die nicht kürzer ist als die maximale Schwingungsamplitude des Schwingkörpers in der Verschiebungsdetektionsrichtung, und wobei eine Bestimmung vorgenommen wird hinsichtlich einer Differenz zwischen der Kapazitätssumme, die sich zwischen der Mehrzahl der stationären Detektionselektroden in der einen Gruppe und der Mehrzahl der diesen jeweils gegenüberliegenden beweglichen Detektionselektroden in der anderen Gruppe entwickelt hat, und der Kapazitätssumme, die sich zwischen der Mehrzahl der stationären Detektionselektroden in der anderen Gruppe und der Mehrzahl der diesen jeweils gegenüberliegenden beweglichen Detektionselektroden entwickelt hat.

**5.** Kreiselgerät nach Anspruch 1 oder 4,
wobei der Schwingkörper in seiner Oberfläche derart konfiguriert ist, dass sich die obere Oberfläche des Halterungsbereichs bis zu der oberen Oberfläche der Mehrzahl der Erhebungen, die die Mehrzahl der beweglichen Detektionselektroden bilden, erstreckt und bündig mit dieser ausgebildet ist, wobei ein zwischen den einander benachbarten beweglichen Detektionselektroden befindlicher Bereich vertieft ausgebildet ist.

**6.** Kreiselgerät nach Anspruch 1 oder 4,
wobei der Schwingkörper in seiner Oberfläche derart konfiguriert ist, dass ein Bereich zwischen den einander benachbarten beweglichen Detektionselektroden und zumindest ein Bereich zwischen dem Ausbildungsbereich der beweglichen Detektionselektroden und dem Halterungsbereich vertieft ausgebildet sind, wobei die Erhebungen, die die beweglichen Detektionselektroden bilden, unvertieft bleiben.

**7.** Kreiselgerät nach Anspruch 6,
wobei die obere Oberfläche des Halterungsbereichs unvertieft und bündig mit der oberen Oberfläche der Erhebungen verbleibt, die die beweglichen Detektionselektroden bilden.

**8.** Eingabevorrichtung mit einem Kreiselgerät nach einem der vorausgehenden Ansprüche.

**9.** Kreiselgerät nach Anspruch 4,
wobei die Anzahl der Mehrzahl der stationären Detektionselektroden jeder der beiden Gruppen gleich der Anzahl der beweglichen Detektionselektroden ist.

**10.** Kreiselgerät nach einem der Ansprüche 2, 4 und 9,
wobei die stationären Detektionselektroden durch eine Mehrzahl von Erhebungen gebildet sind, die der Mehrzahl der beweglichen Detektionselektroden gegenüberliegen.

**11.** Eingabevorrichtung mit einen Kreiselgerät nach Anspruch 9.

**12.** Eingabevorrichtung nach Anspruch 11,
wobei die stationären Delektionselektroden durch eine Mehrzahl von Erhebungen gebildet sind, die der Mehrzahl der beweglichen Detektionselektroden gegenüberliegen.

## Revendications

**1.** Gyroscope comprenant :

un vibreur (2), fabriqué à partir d'un matériau conducteur électriquement, l'extrémité de base de celui-ci servant de partie de support (10) ;
un élément de base destiné à supporter la partie de support (10) du vibreur ; et
un dispositif d'entraînement destiné à entraîner le vibreur ;

**caractérisé par** une pluralité d'électrodes de détection mobiles (5a, 5b) connectées en parallèle, chacune des électrodes de détection mobiles (5a, 5b) étant formées de l'une d'une pluralité de protubérances (9a) du vibreur (2), dans lequel la pluralité de protubérances (9a) sont formées par traitement d'au moins une partie de la surface de la partie d'extrémité du vibreur, et chaque protubérance (9a) a une largeur supérieure à l'amplitude maximum de la vibration du vibreur dans la direction de la détection du déplacement; et une pluralité d'électrodes de détection stationnaires (6a, 6b) connectées en parallèle pour détecter le déplacement du vibreur, dans lequel les électrodes de détection stationnaires (6a, 6b) sont agencées sur l'élément de base de manière à être opposées à la pluralité d'électrodes de détection mobiles (5a, 5b) afin qu'une capacité se développe avec la pluralité des électrodes de détection mobiles opposées à celles-ci, et chacune des électrodes de détection stationnaires (6a,6b) a une largeur qui n'est pas inférieure à l'amplitude maximum de la vibration du vibreur dans la direction de la détection du déplacement, et dans lequel les zones se faisant face entre les électrodes de détection mobiles (5a, 5b) et les électrodes de détection stationnaires (6a, 6b) changent en réaction à la vibration dans la direction de la détection du déplacement.

**2.** Gyroscope selon la revendication 1, **caractérisé en ce que** les protubérances (9a) sont formées sur la surface de la partie d'extrémité du vibreur qui est perpendiculaire à la direction d'entraînement du vibreur et parallèle à la direction de la détection du déplacement du vibreur.

**3.** Gyroscope selon la revendication 1, **caractérisé en ce que** les protubérances (9a) sont formées de manière à s'étendre dans la direction de l'extension du vibreur.

**4.** Gyroscope selon la revendication 2 ou 3, **caractérisé en ce que** la pluralité d'électrodes de détection stationnaires (6a, 6b) sont formées en deux groupes, chaque groupe comprenant une pluralité d'électrodes de détection stationnaires, dans lequel la pluralité d'électrodes de détection stationnaires des deux groupes sont agencées sur l'élément de base de façon à être opposées à la pluralité d'électrodes de détection mobiles, afin qu'une capacité se développe avec la pluralité des électrodes de détection mobiles opposées à celles-ci, le bord externe de chacune de la pluralité d'électrodes de détection stationnaires dans l'un des groupes s'étend en dépassant vers l'extérieur d'une largeur au moins égale à l'amplitude maximum de la vibration du vibreur dans la direction de la détection du déplacement, au-delà du bord externe de chacune de la pluralité d'électrodes de détection mobiles opposées à celles-ci, le bord externe de chacune de la pluralité des électrodes de détection stationnaires de l'autre groupe s'étend en dépassant vers l'extérieur d'une largeur au moins égale à l'amplitude maximum de la vibration du vibreur dans la direction de la détection du déplacement, au-delà du bord externe de chacune de la pluralité d'électrodes de détection mobiles opposées à celui-ci, et chacune des électrodes de détection stationnaires a une largeur supérieure à l'amplitude maximum de la vibration du vibreur dans la direction de la détection du déplacement, et dans lequel est réalisée une détermination de la différence entre la somme de la capacité développée entre la pluralité des électrodes de détection stationnaires dans l'un des groupes et la pluralité des électrodes de détection mobiles respectivement opposées à celles-ci, et la somme de la capacité développée entre la pluralité des électrodes de détection stationnaires dans l'autre groupe et la pluralité des électrodes de détection mobiles respectivement opposées à celles-ci.

**5.** Gyroscope selon la revendication 1 ou 4, dans lequel le vibreur est configuré sur la surface de celui-ci de telle sorte que la surface supérieure de la partie de support s'étende jusqu'à, et affleure, la surface supérieure de la pluralité des protubérances formant la pluralité des électrodes de détection mobiles, avec une zone enfoncée entre les électrodes de détection mobiles adjacentes.

**6.** Gyroscope selon la revendication 1 ou 4, dans lequel le vibreur est configuré sur la surface de celui-ci de telle sorte qu'une zone entre les électrodes de détection mobiles adjacentes et au moins une zone entre la zone de formation des électrodes de détection mobiles et la partie de support, soient enfoncées, les protubérances formant alors les électrodes de détection mobiles restantes non enfoncées.

**7.** Gyroscope selon la revendication 6, dans lequel la surface supérieure de la partie de support reste non enfoncée pour affleurer la surface supérieure des protubérances formant les électrodes de détection mobiles.

**8.** Dispositif d'entrée comprenant un gyroscope selon l'une quelconque des revendications précédentes.

**9.** Gyroscope selon la revendication 4, dans lequel le nombre de la pluralité des électrodes de détection stationnaires de chacun des deux groupes est égal au nombre d'électrodes de détection mobiles.

**10.** Gyroscope selon l'une quelconque des revendications 2, 4 et 9, dans lequel les électrodes de détection stationnaires sont formées d'une pluralité de protubérances, opposées à la pluralité d'électrodes de détection mobiles.

**11.** Dispositif d'entrée, comprenant un gyroscope selon la revendication 9.

**12.** Dispositif d'entrée selon la revendication 11, dans lequel les électrodes de détection stationnaires sont formées d'une pluralité de protubérances, opposées à la pluralité d'électrodes de détection mobiles.

# FIG. 1

# FIG. 2

# FIG. 3

# FIG. 4

FIG. 5A

FIG. 5B

FIG. 5C

FIG. 5D

FIG. 5E

FIG. 5F

FIG 6A

FIG 6B

FIG 6C

FIG 6D

FIG 6E

FIG 6F

# FIG. 7

DRIVING
DIRECTION

ANGULAR
VELOCITY

DIRECTION OF
DISPLACEMENT
DETECTION

# FIG. 8

# FIG. 9

FIG. 10

# FIG. 11

# FIG. 12

# FIG. 13

# FIG. 14

# FIG. 15

A

B

W

G₁

W₁

205,209a

d₂

d₁

206,203a

W₂

G₂

S

S'

Z

203

DRIVING
DIRECTION

ANGULAR
VELOCITY

DIRECTION OF
DISPLACEMENT
DETECTION

FIG. 16A

213

FIG. 16B

213    214    215

15    214

FIG. 16C

213    214    215

214

215    213a

FIG. 16D

213,208

FIG. 16E

213

216    215

FIG. 16F

213,207

216,204

FIG. 17A

217

FIG. 17B

217

208

FIG. 17C

219    217    219

208

FIG. 17D

210    217    202    205  206

203

208

FIG. 17E

210  207  217  204  202

203

208  205  206

# FIG. 18

FIG. 19

211 223 204 202 209 205,209a 225b 224b 224a 225a

210

# FIG. 20

# FIG. 21

# FIG. 22

249

DRIVING
DIRECTION

ANGULAR
VELOCITY

DIRECTION OF
DISPLACEMENT
DETECTION

209

205,209a

252a

252b

251

251

250a

250b

# FIG. 23

253

W

209

G₁

W₁

205,209a

256a

256b

256a   256b

255

Z

W₂

G₂

254

DRIVING
DIRECTION

ANGULAR
VELOCITY

DIRECTION OF
DISPLACEMENT
DETECTION

# FIG. 24

# FIG. 25

332a

332b

$\theta_2$

# FIG. 26

338

X'

$\theta_1$'

$\theta_2$

y'

339

# FIG. 27

## PRIOR ART